# EUROPEAN PATENT SPECIFICATION

(11) **EP 4 448 651 B1**
(45) Date of publication and mention of the grant of the patent: **07.10.2026**
(21) Application number: 21967719.2
(22) Date of filing: 17.12.2021
(51) Int. Cl.: C08L 23/10, C08L 43/04, C08F 230/08, C08F 30/08, C08L 23/12

(54) **OLEFIN/SILANE INTERPOLYMER COMPOSITIONS WITH REDUCED RESIDUAL ALDEHYDE AND/OR KETONE CONTENT**
OLEFIN/SILAN-INTERPOLYMERZUSAMMENSETZUNGEN MIT REDUZIERTEM RESTALDEHYD- UND/ODER KETONGEHALT
COMPOSITIONS D'INTERPOLYMÈRE D'OLÉFINE/SILANE À TENEUR RÉSIDUELLE RÉDUITE EN ALDÉHYDE ET/OU CÉTONE

(43) Date of publication of application: 23.10.2024
(73) Proprietor: Dow Global Technologies LLC, Midland, MI 48674 (US)
(72) Inventor: LIU, Andong, Shanghai 201203 (CN); SUN, Yabin, Shanghai 201203 (CN); ZHANG, Wenxin, Shanghai 201203 (CN); LI PI SHAN, Colin, Lake Jackson, Texas 77566 (US); WU, Gaoxiang, Lake Jackson, Texas 77566 (US)
(74) Representative: Boult Wade Tennant LLP
(86) International application number: PCT/CN2021/138999
(87) International publication number: WO 2023/108584

(56) References cited:
- WO-A1-2018/222460
- WO-A2-01/09207
- CN-A- 1 053 071
- JP-A- H03 255 112
- US-A- 5 225 507
- US-A- 5 225 507
- US-A- 5 578 690

## Description

### BACKGROUND OF THE INVENTION

TPO (thermoplastic polyolefin) is one of the major plastic compounds used for car interior applications, including instrumental panels, door panels and seats. There are increasing governmental and consumer concerns regarding the air quality of a car interior. For example, in Asia, there are proposed regulations aimed at reducing the concentration of aldehydes in a car interior. China has proposed the following concentrations: formaldehyde less than 0.10 mg/m³, acetaldehyde less than 0.20 mg/m³, and acrolein less than 0.05 mg/m³. Polyolefin elastomers (POEs) are used extensively as impact modifiers in TPO formulations. The typical structure of the POE could be, for example, an ethylene/octene copolymer, an ethylene/butene copolymer, or an ethylene/hexene copolymer. However, such TPO formulations typically have higher aldehyde concentrations then what is required by the proposed law in China. Thus, there is a need for TPO formulations that contain lower concentrations of aldehydes. Such TPO formulations should also maintain excellent mechanical properties, such as elongation, tensile modulus, tensile strength, and impact strength.

Chinese Patent Application CN103788471A (English Abstract) discloses a "low-volatile organic compounds" polypropylene resin composition useful for high class, automotive interior parts. The compositions comprises a polypropylene resin, a volatile organic compound (VOC) inhibitor, and an acid-absorbing agent. The VOC inhibitor comprises the following components, by the weight percentage based on the total weight of the VOC inhibitor: 30%-70% of a fully vulcanized powder silicon rubber, 10%-65% of a zeolite powder, and 5%-40% of pseudo-boehmite. The average particle size of rubber particles of the fully vulcanized powder silicon rubber is 0.05-1 [mu]m, and the fully vulcanized powder silicon rubber has a cross-linking structure, and the gel content is 60 wt% or higher.

Chinese Patent Application CN103589072A (English Abstract) discloses a "low-Volatile Organic Compound (VOC)" polypropylene composite material for automobile interior parts. The low-WOC polypropylene composite material is prepared as follows: mixing a polypropylene, a high density polyethylene resin, a filler, a toughening agent, an odor absorbent, an antioxidant, a lubricant and a light stabilizer; pelleting using a double-vacuum, parallel double-screw extruder, and finally drying pellets in an oven. The polypropylene composite material is disclosed as low in VOC content.

European Patent Application EP2284219A1 discloses a polymer composition for use in making products with a thermoplastic process. The polymer composition comprises a functionalized polyolefin modified with unsaturated anhydrides or carboxylic acids and cyclodextrin. The cyclodextrin is covalently bonded to the functionalized polyolefin through a hydroxyl group of the cyclodextrin, whereby a reaction product is formed, and the cyclodextrin is substantially free of a compound in the central pore of the cyclodextrin ring.

International Publication WO2009/103615A1 discloses a fabric conditioning composition of pH less than 7. The composition comprises the following components: a) a quaternary ammonium; b) encapsulated particles comprising an inner shell of a formaldehyde polymer, preferably of the melamine/urea formaldehyde type, and, an outer shell of a non-formaldehyde polymer, preferably of the vinyl acetate and/or methylacrylate type; and c) a formaldehyde scavenger, preferably selected from the group comprising urea, ethylene urea, ethylacetamide, acetoacetamide and mixtures thereof.

U.S. Publication US2009/0227758 discloses a method for reducing the level of aldehyde impurities, the method comprising mixing an oxazolidine-forming amino alcohol with a polyol or polyamine containing one or more aldehyde impurities, and subjecting the resulting mixture to conditions, such that at least a portion of the aldehyde impurities in the polyol or polyamine react with the amino alcohol to reduce the level of aldehyde impurities in the polyol or polyamine. U.S. Publication US2010/0124524 discloses a method for scavenging airborne formaldehyde, which method comprises contacting the airborne formaldehyde with a formaldehyde scavenger of its Formula 1 as described therein.

U.S. Patent 6,624,254 discloses the syntheses of silane functionalized polymers, and polymer conversions through coupling, hydrolysis, hydrolysis and neutralization, condensation, oxidation and hydrosilation (see abstract). See also, U.S. Patent 6,258,902. Silyl-terminated polyolefins and/or silane functionalized polyolefins are disclosed in the following references: U.S. Patent 6,075,103; U.S. Patent 5,578,690; U.S. Patent 5,741,858; H. Makio et al., Silanolytic Chain Transfer in Olefin Polymerization with Supported Single-Site Ziegler-Natta Catalysts, Macromolecules, 2001, 34, 4676-4679; S. B. Amin et al., Alkenylsilane Effects on Organotitanium-Catalyzed Ethylene Polymerization Toward Simultaneous Polyolefin Branch and Functional Group Introduction, J. Am. Chem. Soc., 2006, 128, 4506-4507.

U.S. Patent 10,308,829 discloses polymeric compositions comprising a polyolefin having hydrolyzable silane groups, an organic peroxide, and optionally, a catalyst (see abstract) to catalyze hydrolyzation and condensation. A second step crosslinking was observed in the presence of a silanol condensation catalyst (for example, a sulfonic acid or a blocked sulfonic acid), to further link the hydrolysable silane groups in the polymer chain, to generate enhanced crosslinking efficiency. Hydrolyzable silane groups include alkoxy groups, aryloxy groups, aliphatic acyloxy groups, amino or substituted amino groups, and lower alkyl groups (see, for example, column 4, lines 30-49).

WO-A-2018/222460 discloses a composition comprising (A) from 50 wt% to 85 wt% of a polypropylene polymer; (B) from 5 wt% to 35 wt% of a polyolefin elastomer; (C) from 0.1 wt% to 20 wt% of an acetoacetyl functional polymer; and (D) from 0 wt% to 30 wt% of an additive component.

Additional polymer compositions and/or reduced odor compositions are disclosed in the following references: US20020019469, US 20190225786, US20110160368, CN1840576A (English Abstract), CN103897567A (English Abstract), JP2008086436A (English Abstract), and WO 2015/082316.

However, there remains a need for new TPO compositions that have reduced aldehyde content, while maintaining excellent mechanical properties. These needs have been met by the following invention.

### SUMMARY OF THE INVENTION

In a first aspect, a process to form a composition, the process comprising thermally treating at least the following components:
a) an olefin/silane interpolymer comprising at least one Si-H group, wherein the term "olefin/silane interpolymer" refers to a random interpolymer that comprises, in polymerized form, at least 50 wt%, or a majority weight percent of an olefin (based on the weight of the interpolymer), and a silane monomer and is formed by the copolymerization of at least the olefin and the silane monomer, and
b) a propylene-based polymer, or a propylene-based composition that comprises a propylene-based polymer, wherein the olefin/silane interpolymer is formed in the presence of a bis-biphenyloxy metal complex, wherein the composition does not comprise a peroxide, and wherein the term "thermally treating" refers to the application of heat.

In a second aspect, a composition comprising at least the following components:
a) an olefin/silane interpolymer comprising at least one Si-H group, wherein the term "olefin/silane interpolymer" refers to a random interpolymer that comprises, in polymerized form, at least 50 wt%, or a majority weight percent of an olefin (based on the weight of the interpolymer), and a silane monomer and is formed by the copolymerization of at least the olefin and the silane monomer, and
b) a propylene-based polymer, or a propylene-based composition that comprises at least one propylene-based polymer, wherein the olefin/silane interpolymer is formed in the presence of a bis-biphenyloxy metal complex, and wherein the composition does not comprise a peroxide.

### DETAILED DRESCRIPTION OF THE INVENTION

Polymer compositions, especially suited for TPO applications, have been discovered, as discussed above, and which provide excellent mechanical properties and low total aldehyde content. It has been discovered that the olefin/silane interpolymer acts as a toughing agent of the composition and also stabilizes free radicals generated by the propylene-based polymer during thermal treatment. The silane can reduce the amount of aldehydes, ketones and double bonds, and thus reduce odor in the TPO end use application, such as automotive interior parts.

As discussed, in a first aspect, a process to form a composition, the process comprising thermally treating at least the *components* as described above. In a second aspect, a composition comprising at least the following *components a)* and *b)* as described above.

Each process may comprise a combination of two or more embodiments, as described herein Each composition may comprise a combination of two or more embodiments, as described herein. Each *component a and b* may comprise a combination of two or more embodiments, as described herein. The following embodiments apply to the first through second aspects of the invention, unless stated otherwise.

As used herein, the term "peroxide," refers to a reagent added to a polymer or a polymer composition. This term does not refer to peroxide generated, for example, as a byproduct or reaction product, by a polymer or a composition. For example, this term does not refer to a residual amount of peroxide generated by thermally treating a polymer composition.

In one embodiment, or a combination of two or more embodiments, each described herein, the components are mixed during the thermal treatment.

In one embodiment, or a combination of two or more embodiments, each described herein, the composition (C) has a reduced total aldehyde content, as compared to a composition (SC) that comprises the same *components,* except that *component a* is replaced with a olefin-based polymer that contains the same monomer types as *component a*, except the olefin-based polymer does not contain the "at least one Si-H group," and wherein the olefin-based polymer has a density that is within ± 0.005 g/cc of the density of *component a*, and has a melt index (I2) that is within ± 0.5 g/10 min of the melt index of *component a;* and wherein the reduced total aldehyde content is determined from the following Equation Y: Reduced Total Aldehyde Content (%) = {[(total aldehydes content in (SC)) - (total aldehyde content in (C))] / (total aldehyde content in (SC))} x 100.

In one embodiment, or a combination of two or more embodiments, each described herein, the composition has a reduced total aldehyde content (%) that is ≥ 25%, or ≥ 30%, or ≥ 32%, or ≥ 35%, or ≥ 38%, or ≥ 40%, or ≥ 42%, or ≥ 45%, or ≥ 48%, or ≥ 50%, or ≥ 55%, or ≥ 60%, or ≥ 65%, or ≥ 70%, or ≥ 75%, or 78%, or ≥ 80%, or ≥ 82%, or ≥ 85%, or ≥ 88%, or ≥ 90%, or ≥ 92%, or ≥ 95%, or ≥ 97%, as determined from Equation Y.

In one embodiment, or a combination of two or more embodiments, each described herein, the total aldehyde content is selected from one or more of formaldehyde, acetaldehyde, acrolein or propionaldehyde, and further two or more of formaldehyde, acetaldehyde, acrolein or propionaldehyde, further three of more of formaldehyde, acetaldehyde, acrolein or propionaldehyde, further all four of formaldehyde, acetaldehyde, acrolein or propionaldehyde.

In one embodiment, or a combination of two or more embodiments, each described herein, the olefin/silane interpolymer of *component a* is an ethylene/silane interpolymer, and further an ethylene/alpha-olefin/silane interpolymer, and further an ethylene/alpha-olefin/silane terpolymer.

In one embodiment, or a combination of two or more embodiments, each described herein, *component a* has a density ≥ 0.855 g/cc, or ≥ 0.856 g/cc, or ≥ 0.857 g/cc, or ≥ 0.858 g/cc, or ≥ 0.859 g/cc, or ≥ 0.860 g/cc, or ≥ 0.861 g/cc, or ≥ 0.862 g/cc, or ≥ 0.863 g/cc, or ≥ 0.864 g/cc, or ≥ 0.865 g/cc, or ≥ 0.866 g/cc, or ≥ 0.867 g/cc, or ≥ 0.868 g/cc, or ≥ 0.869 g/cc, or ≥ 0.870 g/cc (1 cc = 1 cm³). In one embodiment, or a combination of two or more embodiments, each described herein, *component a* has a density ≤ 0.940 g/cc, or ≤ 0.930 g/cc, or ≤ 0.920 g/cc, or ≤ 0.910 g/cc, or ≤ 0.900 g/cc, or ≤ 0.890 g/cc, or ≤ 0.888 g/cc, or ≤ 0.886 g/cc, or ≤ 0.884 g/cc, or ≤ 0.882 g/cc, or ≤ 0.880 g/cc, or ≤ 0.879 g/cc.

In one embodiment, or a combination of two or more embodiments, each described herein, *component a* has a melt index (I2) ≥ 0.2 g/10 min ≥ 0.5 g/10 min, or ≥ 0.6 g/10 min, or ≥ 0.7 g/10 min, or ≥ 0.8 g/10 min. In one embodiment, or a combination of two or more embodiments, each described herein, *component a* has a melt index (I2) ≤ 100 g/10 min, or ≤ 50 g/10 min, or ≤ 20 g/10 min, or ≤ 18 g/10 min, or ≤ 16 g/10 min, or ≤ 14 g/10 min, or ≤ 12 g/10 min, or ≤ 10 g/10 min, or ≤ 8.0 g/10 min, or ≤ 6.0 g/10 min, or ≤ 4.0 g/10 min, or ≤ 2.0 g/10 min, or ≤ 1.0 g/10 min.

In one embodiment, or a combination of two or more embodiments, each described herein, for *component b,* the propylene-based polymer, or the propylene-based polymer of the propylene-based composition, is each selected from the following: a) a polypropylene homopolymer, b) a propylene/ethylene interpolymer and further a propylene/ethylene copolymer, or c) a propylene/alpha-olefin interpolymer and further a propylene/alpha-olefin copolymer.

In one embodiment, or a combination of two or more embodiments, each described herein, *component b* has a density ≥ 0.860 g/cc, or ≥ 0.865 g/cc, or ≥ 0.870 g/cc, or ≥ 0.875 g/cc, or ≥ 0.880 g/cc, or ≥ 0.885 g/cc, or ≥ 0.890 g/cc, or ≥ 0.895 g/cc, or ≥ 0.898 g/cc. In one embodiment, or a combination of two or more embodiments, each described herein, *component b* has a density ≤ 0.930 g/cc, or ≤ 0.925 g/cc, or ≤ 0.920 g/cc, or ≤ 0.915 g/cc, or ≤ 0.910 g/cc, or ≤ 0.905 g/cc, or ≤ 0.902 g/cc, or ≤ 0.900 g/cc.

In one embodiment, or a combination of two or more embodiments, each described herein, *component b* has a melt flow rate (MFR) ≥ 1.0 g/10 min, or ≥ 5.0 g/10 min, or ≥ 10 g/10 min, or ≥ 20 g/10 min, or ≥ 30 g/10 min, or ≥ 40 g/10 min, or ≥ 45 g/10 min, or ≥ 50 g/10 min, or ≥ 55 g/10 min. In one embodiment, or a combination of two or more embodiments, each described herein, *component b* has a melt flow rate (MFR) ≤ 120 g/10 min, or ≤ 100 g/10 min, or ≤ 90 g/10 min, or ≤ 80 g/10 min, or ≤ 75 g/10 min, or ≤ 70 g/10 min, or ≤ 65 g/10 min, or ≤ 62 g/10 min.

In one embodiment, or a combination of two or more embodiments, each described herein, the ratio of the density of *component b* to the density of *component a* is ≥ 0.80, or ≥ 0.85, or ≥ 0.90, or ≥ 0.92, or ≥ 0.94, or ≥ 0.96, or ≥ 0.98, or ≥ 1.00, or ≥ 1.01, or 1.02. In one embodiment, or a combination of two or more embodiments, each described herein, the ratio of the density of *component b* to the density of *component a* is ≤ 1.20, or ≤ 1.15, or ≤ 1.10, or ≤ 1.08, or ≤ 1.06, or ≤ 1.05, or ≤ 1.04, or ≤ 1.03.

In one embodiment, or a combination of two or more embodiments, each described herein, the silane of the olefin/silane interpolymer is derived from a silane monomer selected from Formula 1: A-(SiBC-O)x-Si-EFH (Formula 1), where A is an alkenyl group,
B is a hydrocarbyl group or hydrogen, C is a hydrocarbyl group or hydrogen, and where B and C may be the same or different;
H is hydrogen, and x ≥ 0;
E is a hydrocarbyl group or hydrogen, F is a hydrocarbyl group or hydrogen, and where E and F may be the same or different.

In one embodiment, or a combination of two or more embodiments, each described herein, Formula 1 is selected from the following compounds s1) through s16) below: 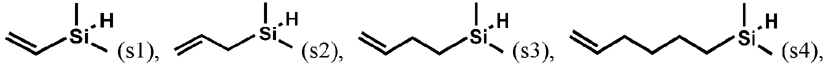 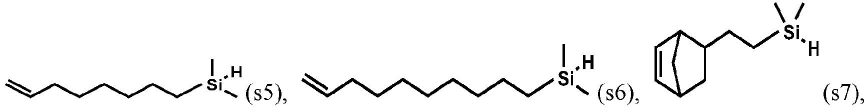 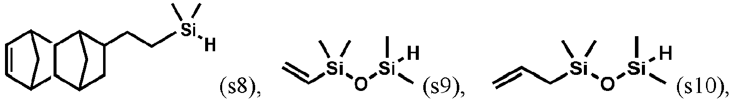 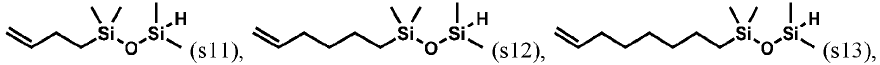 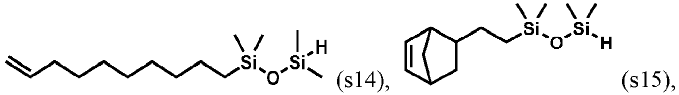 or

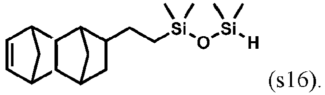

In one embodiment, or a combination of two or more embodiments, each described herein, the composition is thermally treated at a temperature ≥ 140°C, or ≥ 150°C, or ≥ 155°C, or ≥ 160°C, or ≥ 165°C, or ≥ 170°C, or ≥ 175°C, or ≥ 180°C, or ≥ 185°C, or ≥ 190°C, or ≥ 195°C, or ≥ 200°C. In one embodiment, or a combination of two or more embodiments, each described herein, the composition is thermally treated at a temperature ≤ 250°C, or ≤ 240°C, or ≤ 230°C, or ≤ 225°C, or ≤ 220°C, or ≤ 215°C, or ≤ 210°C, or ≤ 205°C.

Also provided is a composition formed by a process of one embodiment, or a combination of two or more embodiments, each described herein, or formed from a composition of one embodiment, or a combination of two or more embodiments, each described herein.

Also provided is an article comprising at least one component formed a composition of one embodiment, or a combination of two or more embodiments, each described herein.

### Silane Monomer

A silane monomer, as used herein, comprises at least one (type) Si-H group. In one embodiment, the silane monomer is selected from Formula 1, as discussed above.

Some examples of silane monomers include hexenylsilane, allylsilane, vinylsilane, octenylsilane, hexenyldimethylsilane, octenyldimethylsilane, vinyl dimethyl silane, vinyldiethylsilane, vinyldi(n-butyl)silane, vinylmethyloctadecylsilane, vinyidiphenylsilane, vinyldibenzylsilane, allyldimethylsilane, allyldiethylsilane, allyldi(n-butyl)silane, allylmethyloctadecylsilane, allyldiphenylsilane, bishexenylsilane, and allyidibenzylsilane. Mixtures of the foregoing alkenylsilanes may also be used.

More specific examples of silane monomers include the following: (5-hexenyldimethylsilane (HDMS), 7-octenyldimethylsilane (ODMS), allyldimethylsilane (ADMS), 3-butenyldimethylsilane, 1-(but-3-en-1-yl)-1,1,3,3-tetramethyldisiloxane (BuMMH), 1-(hex-5-en-1-yl)-1,1,3,3-tetramethyldisiloxane (HexMMH), (2-bicyclo[2.2.1]hept-5-en-2-yl)ethyl)-dimethylsilane (NorDMS) and 1-(2-bicyclo[2.2.1]hept-5-en-2-yl)ethyl)-1,1,3,3-tetramethyldisiloxane (NorMMH). Mixtures of the foregoing alkenylsilanes may also be used.

### Propylene-based Polymers and Propylene-based Compositions Comprising the Same

Propylene-based polymers include, but are not limited to, polypropylene homopolymer, propylene/ethylene interpolymers and copolymers, and propylene/alpha-olefin interpolymers and copolymers.

A propylene-based composition that comprises a propylene-based polymer includes, but is not limited to, an impact modified composition. Impact modified compositions comprise a matrix polymer, which is typically toughened via blending with an elastomer. In one embodiment, the matrix polymer is a propylene-based polymer. Propylene-based polymers include, but are not limited to, polypropylene homopolymer, propylene/ethylene interpolymers and copolymers, and propylene/alpha-olefin interpolymers and copolymers.

In one embodiment, the propylene-based polymer is in the isotactic form of homopolymer polypropylene, although other forms of polypropylene homopolymer can also be used (e.g., syndiotactic or atactic).

Polypropylene impact copolymers (for example, those wherein a secondary copolymerization step reacting ethylene with the propylene) and random copolymers (also reactor modified, and usually containing 1.5-7.0 wt % ethylene copolymerized with the propylene) can also be used as the propylene-based polymer. A complete discussion of various propylene-based polymers is contained in Modern Plastics Encyclopedia/89, mid October 1988 Issue, Volume 65, Number 11, pp. 86-92.

The elastomer composition used to toughen the propylene-based polymer may be any elastomer with sufficient polypropylene compatibility and sufficiently low glass transition temperature to impart impact toughness to the polypropylene. In one embodiment, the elastomer is an ethylene/alpha-olefin interpolymer of copolymer. Suitable alpha-olefins include, but are not limited to, propylene, isobutylene, 1-butene, 1-hexene, 1-pentene, 4-methyl-1-pentene, 1-heptene, 1-octene, 1-nonene, 1-decene, and the like. Propylene, 1-butene and 1-octene are especially preferred.

### Additives

An inventive composition may comprise one or more additives. Additives include, but are not limited to, UV stabilizers, antioxidants, fillers, flame retardants, tackifiers, waxes, compatibilizers, adhesion promoters, plasticizers (for example, oils), antiblocking agents, anti-static agents, release agents, slipping agents, anti-cling additives, colorants, dyes, pigments, and combination thereof.

In one embodiment, or a combination of two or more embodiments, each described herein, the additive is present in an amount ≥ 0.05 wt%, ≥ 0.1 wt%, and/or ≤ 10 wt%, or ≤ 5.0 wt%, ≤ 2.0 wt%, or ≤ 1.5 wt%, or ≤ 1.0 wt%, or ≤ 0.8 wt%, or ≤ 0.6 wt%, or ≤ 0.4 wt%, or ≤ 0.3 wt%, or ≤ 0.2 wt%, based on the weight of the composition.

### Bis-Biphenyloxy Metal Complex

The term "bis-biphenyloxy metal complex," as used herein, refers to a chemical structure comprising a metal or metal ion that is bonded and/or coordinated to one or more, and preferably two, biphenyloxy ligands. In one embodiment, the chemical structure comprises a metal that is bonded to two, biphenyloxy ligands, via an oxygen atom of each respective biphenyloxy ligand. The metal complex is typically rendered catalytically active by the use of one or more cocatalysts.

For example, see Formula D1 below as a nonlimiting example: 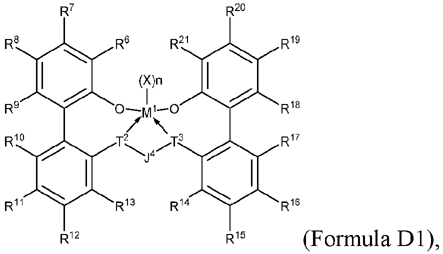
wherein M1 is a metal selected from zirconium (Zr) or hafnium (Hf) or titanium (Ti), and further Zr of Hf; and wherein the metal is in a formal oxidation state of +2, +3, or +4;
each X is independently selected from a substituted or unsubstituted (C1-C30)hydrocarbyl, a substituted or unsubstituted (C1-C30)heterohydrocarbyl, or -H; and wherein each X is independently a monodentate ligand or a bidentate ligand;
n is 0, 1, or 2, and optionally when n is 1, X may be a bidentate ligand;
each of -T²- and -T³- is independently selected from -O-, -S-, -N(R^{N})-, or -P(R^{P})-;
R⁶ and R²¹ are each independently selected from the group consisting of -H, a substituted or unsubstituted (C1-C40)hydrocarbyl, a substituted or unsubstituted (C1-C40)heterohydrocarbyl, -Si(R^{C})₃, -Ge(R^{C})₃, -P(R^{P})₂, -N(R^{N})₂, -OR^{C}, -SR^{C}, -NO₂, -CN, -CF₃, R^{C}S(O)-, R^{C}S(O)₂-, (R^{C})₂C=N-, R^{C}C(O)O-, R^{C}OC(O)-, R^{C}C(O)N(R)-, (R^{C})₂NC(O)-, halogen, radicals having formula (I), radicals having formula (II), and radicals having formula (III): 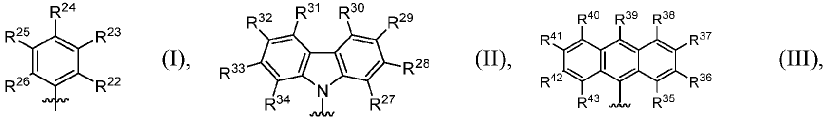
where each of R²²-R²⁶, R²⁷-R³⁴, and R³⁵-R⁴³ is independently selected from a substituted or unsubstituted (C1-C40)hydrocarbyl, a substituted or unsubstituted (C1-C40)heterohydrocarbyl, -Si(R^{C})₃, -Ge(R^{C})₃, -P(R^{P})₂, -N(R^{N})₂, -N=CHR^{C}, -OR^{C}, -SR^{C}, -NO₂, -CN, -CF₃, R^{C}S(O)-, R^{C}S(O)₂-, (R^{C})₂C=N-, R^{C}C(O)O-, R^{C}OC(O)-, R^{C}C(O)N(R^{N})-, (R^{C})₂NC(O)-, halogen, or -H;
each of R⁷-R²⁰ is independently selected from a substituted or unsubstituted (C1-C40)hydrocarbyl, a substituted or unsubstituted (C1-C40)heterohydrocarbyl, -Si(R^{C})₃, -Ge(R^{C})₃, -P(R^{P})₂, -N(R^{N})₂, -N=CHR^{C}, -OR^{C}, -SR^{C}, -NO₂, -CN, -CF₃, R^{C}S(O)-, R^{C}S(O)₂-, (R^{C})₂C=N-, R^{C}C(O)O-, R^{C}OC(O)-, R^{C}C(O)N(R^{N})-, (R^{C})₂NC(O)-, halogen, or -H;
J⁴ is a substituted or unsubstituted (C 1-C40)hydrocarbylene or a substituted or unsubstituted (C1-C40)heterohydrocarbylene, wherein the substituted or unsubstituted (C1-C40)hydrocarbylene has a portion that comprises a 1-carbon atom to 10-carbon atom linker backbone, linking the groups T² and T³ in Formula D1 (to which J⁴ is bonded); or the substituted or unsubstituted (C1-C40)heterohydrocarbylene has a portion that comprises a 1-atom to 10-atom linker backbone, linking the groups T² and T³ in Formula D1, wherein each of the 1 to 10 atoms of the 1-atom to 10-atom linker backbone, independently, is a carbon atom or a heteroatom of a heteroatom group, wherein each heteroatom group is independently O, S, S(O), S(O)₂, Si(R^{C})₂, Ge(R^{C})₂, P(R^{C}), or N(R^{C}), wherein each R^{C} is independently a substituted or unsubstituted (C1-C30)hydrocarbyl or a substituted or unsubstituted (C1-C30)heterohydrocarbyl; and
wherein each R^{P}, R^{N}, and remaining R^{C} in Formula D1 is independently a substituted or unsubstituted (C1-C30)hydrocarbyl, a substituted or unsubstituted (C1-C30)-heterohydrocarbyl, or -H; and wherein the metal complex is overall charge-neutral

### DEFINITIONS

Unless stated to the contrary, implicit from the context, or customary in the art, all parts and percents are based on weight, and all test methods are current as of the filing date of this disclosure.

The term "composition," as used herein, includes a mixture of materials, which comprise the composition, and may include, as well, reaction products and decomposition products formed from the materials of the composition. Any reaction product or decomposition product is typically present in trace or residual amounts.

The term "polymer," as used herein, refers to a polymeric compound prepared by polymerizing monomers, whether of the same or a different type. The generic term polymer thus includes the term homopolymer (employed to refer to polymers prepared from only one type of monomer, with the understanding that trace amounts of impurities can be incorporated into the polymer structure), and the term interpolymer as defined hereinafter. Trace amounts of impurities, such as catalyst residues, can be incorporated into and/or within the polymer. Typically, a polymer is stabilized with very low amounts ("ppm" amounts) of one or more stabilizers.

The term "interpolymer," as used herein, refers to polymer prepared by the polymerization of at least two different types of monomers. The term interpolymer thus includes the term copolymer (employed to refer to polymers prepared from two different types of monomers) and polymers prepared from more than two different types of monomers.

The term "olefin-based polymer," as used herein, refers to a polymer that comprises, in polymerized form, at least 50 wt% or a majority weight percent of an olefin, such as ethylene or propylene (based on the weight of the polymer), and optionally may comprise one or more comonomers.

The term "propylene-based polymer," as used herein, refers to a polymer that comprises, in polymerized form, a majority weight percent of propylene (based on the weight of the polymer), and optionally may comprise one or more comonomers.

The term "propylene/alpha-olefin interpolymer," as used herein, refers to an interpolymer (and preferably a random interpolymer) that comprises, in polymerized form, a majority weight percent of propylene (based on the weight of the interpolymer), and an alpha-olefin.

The term "propylene/alpha-olefin copolymer," as used herein, refers to a copolymer (and preferably a random copolymer) that comprises, in polymerized form, a majority weight percent of propylene (based on the weight of the copolymer), and an alpha-olefin, as the only two monomer types.

The term "propylene/ethylene interpolymer," as used herein, refers to a interpolymer (and preferably a random interpolymer) that comprises, in polymerized form, a majority weight percent of propylene (based on the weight of the interpolymer), and ethylene.

The term "propylene/ethylene copolymer," as used herein, refers to a copolymer (and preferably a random copolymer) that comprises, in polymerized form, a majority weight percent of propylene (based on the weight of the copolymer), and ethylene, as the only two monomer types.

The term "ethylene-based polymer," as used herein, refers to a polymer that comprises, in polymerized form, at least 50 wt% or a majority weight percent of ethylene (based on the weight of the polymer), and optionally may comprise one or more comonomers.

The term "ethylene/alpha-olefin interpolymer," as used herein, refers to a random interpolymer that comprises, in polymerized form, at least 50 wt% or a majority weight percent of ethylene (based on the weight of the interpolymer), and an alpha-olefin.

The term, "ethylene/alpha-olefin copolymer," as used herein, refers to a random copolymer that comprises, in polymerized form, at least 50 wt% or a majority weight percent of ethylene (based on the weight of the copolymer), and an alpha-olefin, as the only two monomer types.

The term "olefin/silane interpolymer," as used herein, refers to a random interpolymer that comprises, in polymerized form, at least 50 wt% or a majority weight percent of an olefin (based on the weight of the interpolymer), and a silane monomer. As used herein, the interpolymer comprises at least one Si-H group, and the phrase "at least one Si-H group" refers to a type of "Si-H" group. It is understood in the art that the interpolymer would contain a multiple number of these groups. The olefin/silane interpolymer is formed by the copolymerization (for example, using a bis-biphenyloxy metal complex (or bis-biphenyl-phenoxy metal complex)) of at least the olefin and the silane monomer. An example of a silane monomer is depicted in Formula 1, as described above.

The term "ethylene/silane interpolymer," as used herein, refers to a random interpolymer that comprises, in polymerized form, at least 50 wt% or a majority weight percent of ethylene (based on the weight of the interpolymer), and a silane monomer. As used herein, the interpolymer comprises at least one Si-H group as discussed above. The ethylene/silane interpolymer is formed by the copolymerization of at least the ethylene and the silane

### monomer.

The term "ethylene/alpha-olefin/silane interpolymer," as used herein, refers to a random interpolymer that comprises, in polymerized form, at least 50 wt% or a majority weight percent of ethylene (based on the weight of the interpolymer), an alpha-olefin and a silane monomer. As used herein, these interpolymer comprises at least one Si-H group, as discussed above. The ethylene/silane interpolymer is formed by the copolymerization of at least the ethylene, the alpha-olefin and the silane monomer.

The term "ethylene/alpha-olefin/silane terpolymer," as used herein, refers to a random terpolymer that comprises, in polymerized form, at least 50 wt% or a majority weight percent of ethylene (based on the weight of the terpolymer), an alpha-olefin and a silane monomer as the only three monomer types. As used herein, the terpolymer comprises at least one Si-H group, as discussed above. The ethylene/silane terpolymer is formed by the copolymerization of the ethylene, the alpha-olefin and the silane monomer, as the only three monomer types.

The term "olefin multi-block interpolymer," as used herein, refers to an interpolymer that is characterized by multiple blocks or segments of two or more polymerized monomer units, differing in chemical or physical properties. In some embodiments, the multi-block interpolymers can be represented by the following formula: (AB)n, where n is at least 1, preferably an integer greater than 1, such as 2, 3, 4, 5, 10, 15, 20, 30, 40, 50, 60, 70, 80, 90, 100, or higher. Here, "A" represents a hard block or segment, and "B" represents a soft block or segment. Preferably the A segments and the B segments are linked in a substantially linear fashion, as opposed to a substantially branched or substantially star-shaped fashion. Preferably, the A segments and the B segments are randomly distributed along the polymer chain. These multi block interpolymers, in general, are produced via a chain shuttling process, such as, for example, described in U.S. Patent 7,858,706. See also U.S. Patent 9,243,173; U.S. Patent 7,608,668; U.S. Patent 7,893,166; U.S. Patent 7,947,793; and U.S. Publication 2020/0197880. The interpolymer comprises, in polymerized form, at least 50 wt% or a majority weight percent of an olefin, such as ethylene or propylene (based on the weight of the multi-block interpolymer), and one or more comonomers.

The term "ethylene/alpha-olefin multi-block interpolymer," as used herein, refers to an interpolymer that is characterized by multiple blocks or segments of two or more polymerized monomer units, differing in chemical or physical properties, as described above for olefin multi-block interpolymer. The ethylene/alpha-olefin multi-block interpolymer comprises, in polymerized form, at least 50 wt% or a majority weight percent of ethylene (based on the weight of the multi-block interpolymer), and an alpha-olefin.

The term "ethylene/alpha-olefin multi-block copolymer," as used herein, refers to a copolymer that is characterized by multiple blocks or segments of two polymerized monomer units, differing in chemical or physical properties, as described above for olefin multi-block interpolymer. The ethylene/alpha-olefin multi-block copolymer comprises, in polymerized form, at least 50 wt% or a majority weight percent of ethylene (based on the weight of the multi-block copolymer), and an alpha-olefin, as the only two monomer types.

The phrase "a majority weight percent," as used herein, in reference to a polymer (or interpolymer, or terpolymer or copolymer), refers to the amount of monomer present in the greatest amount in the polymer.

The term "propylene-based composition," as used herein, refers to a composition comprising a propylene-based polymer.

The phrase "total aldehyde content," as used herein, refers to the amount of one or more aldehyde compound(s), each which can be detected by the "Carbonyl Analysis" described herein. Typically, the "total aldehyde content" includes the sum of one or more of formaldehyde, acetaldehyde, acrolein and propionaldehyde, and further two or more of formaldehyde, acetaldehyde, acrolein and propionaldehyde, further three of more of formaldehyde, acetaldehyde, acrolein and propionaldehyde, further all four of formaldehyde, acetaldehyde, acrolein and propionaldehyde.

The term "heteroatom," refers to an atom other than hydrogen or carbon (for example, O, S, N or P). The term "heteroatom group" refers to a heteroatom or to a chemical group containing one or more heteroatoms.

The terms "hydrocarbon," "hydrocarbyl," and similar terms, as used herein, refer to a respective compound or chemical group, etc., containing only carbon and hydrogen atoms. A divalent "hydrocarbylene group" is defined in similar manner.

The terms "heterohydrocarbon," "heterohydrocarbyl," and similar terms, as used herein, refer to a respective hydrocarbon," or "hydrocarbyl group, etc., in which at least one carbon atom is substituted with a heteroatom group (for example, O, S, N or P). The monovalent heterohydrocarbyl group may be bonded to the remaining compound of interest via a carbon atom or via a heteroatom. A divalent "heterohydrocarbylene group" is defined in similar manner; and the divalent heterohydrocarbylene group may be bonded to the remaining compound of interest via two carbon atoms, or two heteroatoms, or a carbon atom and a heteroatom.

The terms "substituted hydrocarbon," "substituted hydrocarbyl group," and similar terms, as used herein, refer to a respective hydrocarbon or hydrocarbyl group, etc., in which one or more hydrogen atoms is/are independently substituted with a heteroatom group.

The terms "substituted heterohydrocarbon," "substituted heterohydrocarbyl group," and similar terms, as used herein, refer to a respective heterohydrocarbon or heterohydrocarbyl group, etc., in which one or more hydrogen atoms is/are independently substituted with a heteroatom group.

The term "substituted or unsubstituted (C₁-C₃₀)hydrocarbyl," and other like terms, as used herein, denoted the range of total carbon atoms (for example, 1 to 30) that a substituted or unsubstituted hydrocarbyl radical may contain.

The term "substituted or unsubstituted (C₁-C₃₀)heterohydrocarbyl," and other like terms, as used herein, denoted the range of total carbon atoms (for example, 1 to 30) that a "substituted or unsubstituted heterohydrocarbyl radical may contain.

The terms "thermally treating," "thermal treatment," and similar terms, as used herein, in reference to a composition comprising an olefin/silane interpolymer, refer to the application of heat to the composition. Heat may be applied by electrical means (for example, a heating coil) and/or by radiation and/or by hot oil and/or mechanical shearing. Note, the temperature at which the thermal treatment takes place, refers to the temperature of the composition (for example, the melt temperature of the composition).

The term "alkenyl group," as used herein, refers to an organic chemical group that contains at least one carbon-carbon double bond (C=C). In a preferred embodiment, the alkenyl group is a hydrocarbon group containing at least one carbon-carbon double bond, and further containing only one carbon-carbon double bond.

The term "bis-biphenyloxy," as used herein, refers to an organic chemical group that comprises at least one biphenyl structure that is bonded to at least one oxygen atom, and preferably comprises two biphenyl structures, and each structure is independently bonded to at least one oxygen atom.

The phrase "formed in the presence of a bis-biphenyloxy metal complex," in reference to an olefin/silane interpolymer, refers to the polymerization of the monomer constituents of such interpolymer in the presence of the bis-biphenyloxy metal complex.

The terms "comprising," "including," "having," and their derivatives, are not intended to exclude the presence of any additional component, step or procedure, whether the same is specifically disclosed. In order to avoid any doubt, all compositions claimed through use of the term "comprising" may include any additional additive, adjuvant, or compound, whether polymeric or otherwise, unless stated to the contrary. In contrast, the term, "consisting essentially of" excludes from the scope of any succeeding recitation, any other component, step or procedure, excepting those that are not essential to operability. The term "consisting of" excludes any component, step or procedure, not specifically delineated or listed.

### Listing of Some Processes and Compositions

**A]** A process to form a composition, the process comprising thermally treating at least the following *components:*
   *a)* an olefin/silane interpolymer comprising at least one Si-H group, wherein the term "olefin/silane interpolymer" refers to a random interpolymer that comprises, in polymerized form, at least 50 wt%, or a majority weight percent of an olefin (based on the weight of the interpolymer), and a silane monomer and is formed by the copolymerization of at least the olefin and the silane monomer, and
   *b)* a propylene-based polymer, or a propylene-based composition that comprises a propylene-based polymer, wherein the olefin/silane interpolymer is formed in the presence of a bis-biphenyloxy metal complex, wherein the composition does not comprise a peroxide, and wherein the term "thermally treating" refers to the application of heat.
**B]** The process of A] above, wherein the *components* are mixed during the thermal treatment.
**C]** The process of any one of A]-B] (A] through B]) above, wherein the composition (C) has a reduced total aldehyde content, as compared to a composition (SC) that comprises the same *components,* except that *component a* is replaced with a olefin-based polymer that contains the same monomer types as *component a*, except the olefin-based polymer does not contain the "at least one Si-H group," and wherein the olefin-based polymer has a density that is within ± 0.005 g/cc of the density of *component a*, and has a melt index (I2) that is within ± 0.5 g/10 min of the melt index of *component a*; and wherein the reduced total aldehyde content is determined from the following Equation Y: Reduced Total Aldehyde Content (%) = {[(total aldehyde content in (SC)) - (total aldehyde content in (C))] / (total aldehyde content in (SC))} x 100.
**D]** The process of C] above, wherein the composition has a reduced total aldehyde content (%) that is ≥ 25%, or ≥ 30%, or ≥ 32%, or ≥ 35%, or ≥ 38%, or ≥ 40%, or ≥ 42%, or ≥ 45%, or ≥ 48%, or ≥ 50%, or ≥ 55%, or ≥ 60%, or ≥ 65%, or ≥ 70%, or ≥ 75%, or 78%, or ≥ 80%, or ≥ 82%, or ≥ 85%, or ≥ 88%, or ≥ 90%, or ≥ 92%, or ≥ 95%, or ≥ 97%, as determined from Equation Y.
**E]** The process of C] or D] above, wherein the total aldehyde content is selected from one or more of formaldehyde, acetaldehyde, acrolein and propionaldehyde, or two or more of formaldehyde, acetaldehyde, acrolein and propionaldehyde, or three of more of formaldehyde, acetaldehyde, acrolein and propionaldehyde, or all four of formaldehyde, acetaldehyde, acrolein and propionaldehyde.
**F]** The process of any one of A]-E] above, wherein the composition has a reduced total aldehyde content (%), and the total aldehyde content is selected from one or more of formaldehyde, acetaldehyde, acrolein or propionaldehyde, or two or more of formaldehyde, acetaldehyde, acrolein and propionaldehyde, or three of more of formaldehyde, acetaldehyde, acrolein and propionaldehyde, or all four of formaldehyde, acetaldehyde, acrolein and propionaldehyde.
**G]** The process of any one of A]-F] above, wherein the olefin/silane interpolymer of *component a* is an ethylene/silane interpolymer, or an ethylene/alpha-olefin/silane interpolymer, or an ethylene/alpha-olefin/silane terpolymer.
**H]** The process of G] above, wherein the alpha-olefin of the ethylene/alpha-olefin/silane interpolymer or terpolymer is a C3-C20 alpha-olefin, or a C3-C10 alpha-olefin, or a C3-C8 alpha-olefin, or one of propylene, 1-butene, 1-hexene or 1-octene, or one of propylene, 1-butene, or 1-octene, or one of 1-butene or 1-octene, or 1-octene.
**I]** The process of any one of A]- H] above, wherein the interpolymer of *component a* comprises, in polymerized form, ≥ 0.10 wt%, or ≥ 0.20 wt%, or ≥ 0.40 wt%, or ≥ 0.60 wt%, or ≥ 0.80 wt%, or ≥ 1.0 wt%, or ≥ 1.2 wt%, or ≥ 1.3 wt%, or ≥ 1.4 wt%, or ≥ 1.5 wt%, or ≥ 2.0 wt%, or ≥ 2.5 wt%, or ≥ 2.8 wt%, or ≥ 3.0 wt%, or ≥ 3.2 wt%, or ≥ 3.4 wt% of the silane, based on the weight of the interpolymer.
**J]** The process of any one of A]- I] above, wherein the interpolymer of *component a* comprises, in polymerized form, ≤ 40 wt%, or ≤ 30 wt%, or ≤ 20 wt%, or ≤ 10 wt%, or ≤ 8.0 wt%, or ≤ 6.0 wt%, or ≤ 5.0 wt%, or ≤ 4.5 wt%, or ≤ 4.0 wt% of the silane, based on the weight of the interpolymer.
**K]** The process of any one of A]-J] above, wherein *component a* has a density ≥ 0.855 g/cc, or ≥ 0.856 g/cc, or ≥ 0.857 g/cc, or ≥ 0.858 g/cc, or ≥ 0.859 g/cc, or ≥ 0.860 g/cc, or ≥ 0.861 g/cc, or ≥ 0.862 g/cc, or ≥ 0.863 g/cc, or ≥ 0.864 g/cc, or ≥ 0.865 g/cc, or ≥ 0.866 g/cc, or ≥ 0.867 g/cc, or ≥ 0.868 g/cc, or ≥ 0.869 g/cc, or ≥ 0.870 g/cc (1 cc = 1 cm³).
**L]** The process of any one of A]-K] above, wherein *component a* has a density ≤ 0.940 g/cc, or ≤ 0.930 g/cc, or ≤ 0.920 g/cc, or ≤ 0.910 g/cc, or ≤ 0.900 g/cc, or ≤ 0.890 g/cc, or ≤ 0.888 g/cc, or ≤ 0.886 g/cc, or ≤ 0.884 g/cc, or ≤ 0.882 g/cc, or ≤ 0.880 g/cc, or ≤ 0.879 g/cc. **M]** The process of any one of A]-L ] above, wherein *component a* has a melt index (I2) ≥ 0.2 g/10 min, or ≥ 0.5 g/10 min, or ≥ 0.6 g/10 min, or ≥ 0.7 g/10 min, or ≥ 0.8 g/10 min.
**N]** The process of any one of A]-M] above, wherein *component a* has a melt index (I2) ≤ 100 g/10 min, or ≤ 50 g/10 min, or ≤ 20 g/10 min, or ≤ 18 g/10 min, or ≤ 16 g/10 min, or ≤ 14 g/10 min, or ≤ 12 g/10 min, or ≤ 10 g/10 min, or ≤ 8.0 g/10 min, or ≤ 6.0 g/10 min, or ≤ 4.0 g/10 min, or ≤ 2.0 g/10 min, or ≤ 1.0 g/10 min.
**O**] A composition formed by the process of any one of A]-N] above.
**P]** A composition comprising at least the following *components:*
   *a)* an olefin/silane interpolymer comprising at least one Si-H group, wherein the term "olefin/silane interpolymer" refers to a random interpolymer that comprises, in polymerized form, at least 50 wt%, or a majority weight percent of an olefin (based on the weight of the interpolymer), and a silane monomer and is formed by the copolymerization of at least the olefin and the silane monomer, and
   b) a propylene-based polymer, or a propylene-based composition that comprises as propylene-based polymer, wherein the olefin/silane interpolymer is formed in the presence of a bis-biphenyloxy metal complex, and wherein the composition does not comprise a peroxide.
**Q]** The composition of P] above, wherein the composition is formed by thermally treating the *components,* and further by mixing the *components* during the thermal treatment.
**R]** The composition of P] above, wherein the composition is formed by thermally treating the *component(s),* and further by mixing the *component(s)* during the thermal treatment.
**S]** The composition of any one of P]-R] above, wherein the composition (C) has a reduced total aldehyde content, as compared to a composition (SC) that comprises the same *components,* except that *component a* is replaced with a olefin-based polymer that contains the same monomer types as *component a*, except the olefin-based polymer does not contain the "at least one Si-H group," and wherein the olefin-based polymer has a density that is within ± 0.005 g/cc of the density of *component a*, and has a melt index (I2) that is within ± 0.5 g/10 min of the melt index of *component a*; and wherein the reduced total aldehyde content is determined from the following Equation Y: Reduced Total Aldehyde Content (%) = {[(total aldehyde content in (SC)) - (total aldehyde content in (C))] / (total aldehyde content in (SC))} x 100.
**T]** The composition of S] above, wherein the composition has a reduced total aldehyde content (%) that is ≥ 25%, or ≥ 30%, or ≥ 32%, or ≥ 35%, or ≥ 38%, or ≥ 40%, or ≥ 42%, or ≥ 45%, or ≥ 48%, or ≥ 50%, or ≥ 55%, or ≥ 60%, or ≥ 65%, or ≥ 70%, or ≥ 75%, or 78%, or ≥ 80%, or ≥ 82%, or ≥ 85%, or ≥ 88%, or ≥ 90%, or ≥ 92%, or ≥ 95%, or ≥ 97%, as determined from Equation Y.
**U]** The composition of S] or T] above, wherein the total aldehyde content is selected from one or more of formaldehyde, acetaldehyde, acrolein and propionaldehyde, or two or more of formaldehyde, acetaldehyde, acrolein and propionaldehyde, or three of more of formaldehyde, acetaldehyde, acrolein and propionaldehyde, or all four of formaldehyde, acetaldehyde, acrolein and propionaldehyde.
**V]** The composition of any one of P]- U] above, wherein the olefin/silane interpolymer of *component a* is an ethylene/silane interpolymer, or an ethylene/alpha-olefin/silane interpolymer, or an ethylene/alpha-olefin/silane terpolymer.
**W]** The composition of V] above, wherein the alpha-olefin of the ethylene/alpha-olefin/silane interpolymer or terpolymer is a C3-C20 alpha-olefin, or a C3-C10 alpha-olefin, or a C3-C8 alpha-olefin, or one of propylene, 1-butene, 1-hexene or 1-octene, or one of propylene, 1-butene, or 1-octene, or one of 1-butene or 1-octene, or 1-octene.
**A2]** The composition of any one of P]-W] above, wherein the interpolymer of *component a* comprises, in polymerized form, ≥ 0.10 wt%, or ≥ 0.20 wt%, or ≥ 0.40 wt%, or ≥ 0.60 wt%, or ≥ 0.80 wt%, or ≥ 1.0 wt%, or ≥ 1.2 wt%, or ≥ 1.3 wt%, or ≥ 1.4 wt%, or ≥ 1.5 wt% of the silane, based on the weight of the interpolymer.
**B2]** The composition of any one of P]-A2] above, wherein the interpolymer of *component a* comprises, in polymerized form, ≤ 40 wt%, or ≤ 30 wt%, or ≤ 20 wt%, or ≤ 10 wt%, or ≤ 8.0 wt%, or ≤ 6.0 wt%, or ≤ 5.0 wt%, or ≤ 4.5 wt%, or ≤ 4.0 wt% of the silane, based on the weight of the interpolymer.
**C2]** The composition of any one of P]-B2] above, wherein *component a* has a density ≥ 0.855 g/cc, or ≥ 0.856 g/cc, or ≥ 0.857 g/cc, or ≥ 0.858 g/cc, or ≥ 0.859 g/cc, or ≥ 0.860 g/cc, or ≥ 0.861 g/cc, or ≥ 0.862 g/cc, or ≥ 0.863 g/cc, or ≥ 0.864 g/cc, or ≥ 0.865 g/cc, or ≥ 0.866 g/cc, or ≥ 0.867 g/cc, or ≥ 0.868 g/cc, or ≥ 0.869 g/cc, or ≥ 0.870 g/cc (1 cc = 1 cm³).
**D2]** The composition of any one of P]-C2] above, wherein *component a* has a density ≤ 0.940 g/cc, or ≤ 0.930 g/cc, or ≤ 0.920 g/cc, or ≤ 0.910 g/cc, or ≤ 0.900 g/cc, or ≤ 0.890 g/cc, or ≤ 0.888 g/cc, or ≤ 0.886 g/cc, or ≤ 0.884 g/cc, or ≤ 0.882 g/cc, or ≤ 0.880 g/cc, or ≤ 0.879 g/cc.
**E2]** The composition of any one of P]-D2] above, wherein *component a* has a melt index (I2) ≥ 0.2 g/10 min, or ≥ 0.5 g/10 min, or ≥ 0.6 g/10 min, or ≥ 0.7 g/10 min, or ≥ 0.8 g/10 min.
**F2]** The composition of any one of P]-E2] above, wherein *component a* has a melt index (I2) ≤ 100 g/10 min, or ≤ 50 g/10 min, or ≤ 20 g/10 min, or ≤ 18 g/10 min, or ≤ 16 g/10 min, or ≤ 14 g/10 min, or ≤ 12 g/10 min, or ≤ 10 g/10 min, or ≤ 8.0 g/10 min, or ≤ 6.0 g/10 min, or ≤ 4.0 g/10 min, or ≤ 2.0 g/10 min, or ≤ 1.0 g/10 min.
**A3]** The process of any one of A], B] or C]- N] above, or the composition of any one of O]-Q] or S]-F2] above, wherein, for *component b,* the propylene-based polymer, or the propylene-based polymer of the propylene-based composition, is each selected from the following: a) a polypropylene homopolymer, b) a propylene/ethylene interpolymer or a propylene/ethylene copolymer, or c) a propylene/alpha-olefin interpolymer or a propylene/alpha-olefin copolymer.
**B3]** The process of any one of A], B], C]- N] or A3] above, or the composition of any one of O]- S], S]-F2] or A3] above, wherein component b is the propylene-based polymer, and further selected from the following: a) a polypropylene homopolymer, b) a propylene/ethylene interpolymer or a propylene/ethylene copolymer, or c) a propylene/alpha-olefin interpolymer or a propylene/alpha-olefin copolymer.
**C3]** The process of any one of A], B], C]-N] or A3] above, or the composition of any one of O]- S], S]-F2] or A3] above, wherein component b is the propylene-based composition, and wherein the propylene-based polymer of the propylene-based composition is selected from the following: a) a polypropylene homopolymer, b) a propylene/ethylene interpolymer or a propylene/ethylene copolymer, or c) a propylene/alpha-olefin interpolymer or a propylene/alpha-olefin copolymer.
**D3]** The process of any one of A3]-C3] above, or the composition of any one of A3]-C3] above, wherein the alpha-olefin of the propylene/alpha-olefin interpolymer or copolymer is a C4-C20 alpha-olefin, or a C4-C10 alpha-olefin, or a C4-C8 alpha-olefin, or one of 1-butene, 1-hexene or 1-octene, or one of 1-butene, or 1-octene, or 1-octene.
**E3]** The process of any one of A]-N] or A3]-D3] above, or the composition of any one of O]-F2] or A3]-D3] above, wherein the composition is thermally treated at a temperature ≥ 140°C, or ≥ 150°C, or ≥ 155°C, or ≥ 160°C, or ≥ 165°C, or ≥ 170°C, or ≥ 175°C, or ≥ 180°C, or ≥ 185°C, or ≥ 190°C, or ≥ 195°C, or ≥ 200°C, and/or at a temperature ≤ 250°C, or ≤ 240°C, or ≤ 230°C, or ≤ 225°C, or ≤ 220°C, or ≤ 215°C, or ≤ 210°C, or ≤ 205°C.
**F3]** The process of any one of A], B], C]- N] or A3]-E3] above, or the composition of any one of O]- S], S]-F2] or A3]-E3] above, wherein component b has a density ≥ 0.860 g/cc, or ≥ 0.865 g/cc, or ≥ 0.870 g/cc, or ≥ 0.875 g/cc, or ≥ 0.880 g/cc, or ≥ 0.885 g/cc, or ≥ 0.890 g/cc, or ≥ 0.895 g/cc, or ≥ 0.898 g/cc.
**G3]** The process of any one of A], B], C]-N] or A3]-F3] above, or the composition of any one of O]- Q], S]-F2] or A3]-F3] above, wherein component b has a density ≤ 0.930 g/cc, or ≤ 0.925 g/cc, or ≤ 0.920 g/cc, or ≤ 0.915 g/cc, or ≤ 0.910 g/cc, or ≤ 0.905 g/cc, or ≤ 0.902 g/cc, or ≤ 0.900 g/cc.
**H3]** The process of any one of A], B], C]-N] or A3]-G3] above, or the composition of any one of O]-Q], S]-F2] or A3]-G3] above, wherein *component b* has a melt flow rate (MFR) ≥ 1.0 g/10 min, or ≥ 5.0 g/10 min, or ≥ 10 g/10 min, or ≥ 20 g/10 min, or ≥ 30 g/10 min, or ≥ 40 g/10 min, or ≥ 45 g/10 min, or ≥ 50 g/10 min, or ≥ 55 g/10 min.
**I3]** The process of any one of A], B], C]-N] or A3]-H3] above, or the composition of any one of O]-Q], S]-F2] or A3]-H3] above, wherein *component b* has a melt flow rate (MFR) ≤ 120 g/10 min, or ≤ 110 g/10 min, or ≤ 100 g/10 min, or ≤ 90 g/10 min, or ≤ 80 g/10 min, or ≤ 75 g/10 min, or ≤ 70 g/10 min, or ≤ 65 g/10 min, or ≤ 62 g/10 min.
**J3]** The process of any one of A], B], C]-N] or A3]-I3] above, or the composition of any one of O]- Q], S]-F2] or A3]-I3] above, wherein the ratio of the density of component b to the density of component a is ≥ 0.80, or ≥ 0.85, or ≥ 0.90, or 0.92, or ≥ 0.94, or ≥ 0.96, or ≥ 0.98, or ≥ 1.00, or ≥ 1.01, or 1.02.
**K3]** The process of any one of A], B], C]-N] or A3]-J3] above, or the composition of any one of O]-Q], S]-F2] or A3]-J3] above, wherein the ratio of the density of component b to the density of component *a* is ≤ 1.20, or ≤ 1.15, or ≤ 1.10, or ≤ 1.08, or ≤ 1.06, or ≤ 1.05, or ≤ 1.04, or ≤ 1.03.
**L3]** The process of any one of A], B], C]-N] or A3]-K3] above, or the composition of any one of O]-Q], S]-F2] or A3]-K3] above, wherein the ratio of the melt flow rate (MFR) of component b to the melt index (I2) of *component a* is ≥ 2.0, or ≥ 2.5, or ≥ 3.0, or 3.2, or ≥ 3.4, or ≥ 3.6, or ≥ 3.7.
**M3]** The process of any one of A], B], C]-N] or A3]-L3] above, or the composition of any one of O]-Q], S]-F2] or A3]-L3] above, wherein the ratio of the melt flow rate (MFR) of component b to the melt index (I2) of component a is ≤ 90, or ≤ 85, or ≤ 80, or ≤ 78, or ≤ 76, or ≤ 75.
**N3]** The process of any one of A]-N] or A3]-M3] above, or the composition of any one of O]-F2] or A3]-M3] above, wherein the silane is derived from a silane monomer selected from Formula 1, as described above.
**O3]** The process of N3] above, or the composition of N3] above, wherein, for Formula 1, x is from 0 to 10, or from 0 to 8, or from 0 to 6, or from 0 to 4, or from 0 to 2, or 0 or 1, or 0.
**P3]** The process of N3] or O3] above, or the composition of N3] or O3] above, wherein, for Formula 1, A is a C2-C50 alkenyl group, or a C2-C40 alkenyl group, or a C2-C30 alkenyl group, or a C2-C20 alkenyl group.
**Q3]** The process of any one of N3]-P3] above, or the composition of any one of N3]-P3] above, wherein, for Formula 1, A is selected from the following structures i) - iv):
   i) R¹R²C=CR³- , where each of R¹, R² is independently hydrogen or an alkyl group, and R³ is hydrogen, and wherein R¹ and R² may be the same or different;
   ii) R¹R²C=CR³-(CR⁴R⁵)ₙ- , where each of R¹, R², R⁴, R⁵ is independently hydrogen, or an alkyl group, and R³ is hydrogen, and wherein two or more from R¹, R², R⁴, R⁵ may be the same or different, and n is from 1 to 10, or 1 to 8, or 1 to 6, or 1 to 4, or 1 to 2, or 1;
   iii) 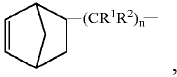 where each of R¹and R² is independently hydrogen or an alkyl group, and wherein R¹, and R² may be the same or different, and n is from 1 to 10, or 1 to 8, or 1 to 6, or 1 to 4, or 1 to 2, or 1; or
   iv) 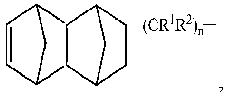 where each of R¹ and R² is independently hydrogen or an alkyl group, and wherein R¹, and R² may be the same or different, and n is from 1 to 10, or 1 to 8, or 1 to 6, or 1 to 4, or 1 to 2, or 1.
**R3]** The process of any one of N3]-Q3] above, or the composition of any one of N3]-Q3] above, wherein, for Formula 1, A is selected from the following structures i) - iv):
   i) H₂C=CH-;
   ii) H₂C=CH-(CH₂)ₙ- , where n is from 1 to 10, or 1 to 8, or 1 to 6, or 1 to 4, or 1 to 2, or 1;
   iii) 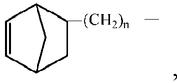 where n is from 1 to 10, or 1 to 8, or 1 to 6, or 1 to 4, or 1 to 2, or 1; or
   iv) 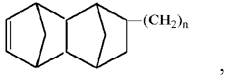 where n is from 1 to 10, or 1 to 8, or 1 to 6, or 1 to 4, or 1 to 2, or 1.
**S3]** The process of any one of N3]-R3] above, or the composition of any one of N3]-R3] above, wherein, for Formula 1, B is an alkyl, or a C1-C5 alkyl, or a C1-C4 alkyl, or a C1-C3 alkyl, or a C1-C2 alkyl, or methyl.
**T3]** The process of any one of N3]-S3] above, or the composition of any one of N3]-S3] above, wherein, for Formula 1, C is an alkyl, or a C1-C5 alkyl, or a C1-C4 alkyl, or a C1-C3 alkyl, or a C1-C2 alkyl, or methyl.
**U3]** The process of any one of N3]-T3] above, or the composition of any one of N3]-T3] above, wherein, for Formula 1, E is an alkyl, or a C1-C5 alkyl, or a C1-C4 alkyl, or a C1-C3 alkyl, or a C1-C2 alkyl, or methyl.
**V3]** The process of any one of N3]-U3] above, or the composition of any one of N3]-U3] above, wherein, for Formula 1, F is an alkyl, or a C1-C5 alkyl, or a C1-C4 alkyl, or a C1-C3 alkyl, or a C1-C2 alkyl, or methyl.
**W3]** The process of any one of N3]-V3] above, or the composition of any one of N3]-V3] above, wherein Formula 1 is selected from compounds s1) through s16), as described above.
**X3]** The process of any one of N3]-W3] above, or the composition of any one of N3]-W3] above, wherein Formula 1 is selected from structures s1) to s8), as described above.
**Y3]** The process of any one of N3]-W3] above, or the composition of any one of N3]-W3] above, wherein Formula 1 is selected from structures s9) to s16), as described above.
**Z3]** The process of any one of N3]-Y3] above, or the composition of any one of N3]-Y3] above, wherein the silane is derived from a silane monomer selected from the following compounds: allyldimethylsilane, 3-butenyldimethyl-silane, 1-(but-3-en-1-yl)-1,1,3,3-tetramethyl-disiloxane (BuMMH), 1-(hex-5-en-1-yl)-1,1,3,3-tetramethyldisiloxane (HexMMH), (2-bicyclo-[2.2.1]hept-5-en-2-yl)ethyl)dimethyl-silane (NorDMS), 1-(2-bicyclo[2.2.1]hept-5-en-2-yl)ethyl)-1,1,3,3-tetramethyldisiloxane (NorMMH), or any combination thereof.
**A4]** The process of any one of A]-N] or A3]-Z3] above, or the composition of any one of O]-F2] or A3]-Z3] above, wherein *component a* has a melting temperature (Tₘ) ≥ 56°C, or ≥ 58°C, or ≥ 59°C, or ≥ 60°C, or ≥ 61°C, or ≥ 62°C and/or ≤ 85°C, or ≤ 80°C, or ≤ 78°C, or ≤ 76°C, or ≤ 74°C, or ≤ 72°C, or ≤ 70°C, or ≤ 68°C, or ≤ 66°C.
**B4]** The process of any one of A]-N] or A3]-A4] above, or the composition of any one of O]-F2] or A3]-A4] above, wherein component a has a molecular weight distribution (MWD = Mw/Mn) ≥ 1.5, or ≥ 1.6, or ≥ 1.7, or ≥ 1.8, or ≥ 1.9 and/or ≤ 5.0, or ≤ 4.5, or ≤ 4.0, or ≤ 3.5, or ≤ 3.0, or ≤ 2.8, or ≤ 2.7, or ≤ 2.6, or ≤ 2.5, or ≤ 2.4, or ≤ 2.3.
**C4]** The process of any one of A]-N] or A3]-B4] above, or the composition of any one of O]-F2] or A3]-B4] above, wherein *component a* has a number average molecular weight (Mn) ≥ 10,000, or ≥ 15,000, or ≥ 20,000, or ≥ 25,000, or ≥ 30,000, or ≥ 32,000, or ≥ 35,000, or ≥ 40,000 g/mol and/or ≤ 100,000, or ≤ 90,000, or ≤ 80,000, or ≤ 75,000, or ≤ 70,000, or ≤ 65,000 g/mol, or ≤ 60,000 g/mol, or ≤ 55,000 g/mol.
**D4]** The process of any one of A]-N] or A3]-C4] above, or the composition of any one of O]-F2] or A3]-C4] above, wherein *component a* has a weight average molecular weight (Mw) ≥ 20,000, or ≥ 30,000, or ≥ 40,000, or ≥ 50,000, or ≥ 60,000, or ≥ 70,000, or ≥ 80,000 g/mol, or ≥ 90,000 g/mol and/or ≤ 300,000, or ≤ 250,000, or ≤ 200,000, or ≤ 150,000, or ≤ 120,000, or ≤ 110,000 g/mol.
**E4]** The process of any one of A]-N] or A3]-D4] above, or the composition of any one of O]-D4] above, wherein *component a* has an I10/I2 ratio ≥ 6.0, or ≥ 7.0, or ≥ 8.0, or ≥ 9.0, or ≥ 10 and/or ≤ 30, or ≤ 25, or ≤ 20, or ≤ 15, or ≤ 12.
**F4]** The process of any one of A], B], *C]- N*] or A3]-E4] above, or the composition of any one of O]- Q], S]-F2] or A3]-E4] above, wherein the weight ratio of *component b to component a* ≥ 1.0, or ≥ 1.1, or ≥ 1.2, or ≥ 1.3, or ≥ 1.4, or ≥ 1.5 or ≥ 1.6. Further, the ratio is ≤ 20, or ≤ 15, or ≤ 10, or ≤ 5.0.
**G4]** The process of any one of A]-NP] or A3]-F4] above, or the composition of any one of O]-F2] or A3]-F4] above, wherein the composition comprises *component c,* at least one filler.
**H4]** The process of G4] above, or composition of G4] above, wherein *component c* is selected from inorganic fillers and/or organic fillers, and further from talc, glass fiber, carbon fiber, wood fiber, clay, calcium carbonate, carbon black, magnesium hydroxide whisker, ATH (Aluminium Trihydrate), TiO2 or any combination thereof, and further from talc, glass fiber, carbon fiber, wood fiber, clay, calcium carbonate, TiO2 or any combination thereof.
**I4]** The process of G4] or H4] above, or composition of G4] or H4] above, wherein *component c* comprises two fillers, Filler A and Filler B, and further the weight ratio of Filler A to Filler B is ≥ 5.0, or ≥ 10, or ≥ 15, or ≥ 18, or ≥ 20 and/or ≤ 60, or ≤ 50, or ≤ 40, or ≤ 30, or ≤ 25.
**J4]** The process of any one of A]-N] or A3]-I4] above, or the composition of any one of O]-F2] or A3]-I4] above, wherein *component a* is present in an amount ≥ 0.1 wt%, or ≥ 0.5 wt%, ≥ 1.0 wt%, or ≥ 2.0 wt%, or ≥ 4.0 wt%, or ≥ 6.0 wt%, ≥ 8.0 wt%, or ≥ 9.0 wt%, or ≥ 10 wt%, and/or ≤ 70 wt%, or ≤ 60 wt%, or ≤ 50 wt%, or ≤ 45 wt%, or ≤ 40 wt%, or ≤ 35 wt%, or ≤ 30 wt%, based on the weight of the composition.
**K4]** The process of any one of A], B], C]-N] or A3]-J4] above, or the composition of any one of O]-Q], S]-F2] or A3]-J4] above, wherein component b is present in an amount ≥ 30 wt%, ≥ 35 wt%, ≥ 40 wt%, or ≥ 45 wt%, or ≥ 50 wt%, and/or ≤ 99 wt%, or ≤ 95 wt%, or ≤ 90 wt%, or ≤ 85 wt%, or ≤ 80 wt%, or ≤ 75 wt%, or ≤ 70 wt%, or ≤ 68 wt%, or ≤ 65 wt%, based on the weight of the composition.
**L4]** The process of any one of G4]-K4] above, or composition of any one of G4]-K4] above, wherein *component c* is present in an amount ≥ 0.1 wt%, or ≥ 0.5 wt%, ≥ 1.0 wt%, or ≥ 2.0 wt%, or ≥ 5.0 wt%, or ≥ 10 wt%, ≥ 12 wt%, or ≥ 14 wt%, or ≥ 16 wt%, or ≥ 18 wt%, or ≥ 20 wt%, and/or ≤ 80 wt%, or ≤ 70 wt%, or ≤ 60 wt%, or ≤ 50 wt%, or ≤ 45 wt%, or ≤ 40 wt%, or ≤ 35 wt%, or ≤ 30 wt%, or ≤ 25 wt%, based on the weight of the composition.
**M4]** The process of any one of A], B], C]-N] or A3]-L4] above, or the composition of any one of O]- Q], S]-F2] or A3]-L4] above, wherein the sum of *component a* and *component b* is present in an amount ≥ 40 wt%, ≥ 45 wt%, or ≥ 50 wt%, or ≥ 52 wt%, or ≥ 54 wt%, or ≥ 56 wt%, or ≥ 58 wt%, or ≥ 60 wt%, or ≥ 62 wt%, or ≥ 64 wt% and/or ≤ 90 wt%, or ≤ 88 wt%, or ≤ 85 wt%, or ≤ 82 wt%, or ≤ 80 wt%, based on the weight of the composition.
**N4]** The process of any one of G4]-M4] above, or the composition of any one of G4]-M4] above, wherein the sum of *component a*, *component b* and *component c* is present in an amount ≥ 80 wt%, ≥ 85 wt%, or ≥ 90 wt%, or ≥ 95 wt%, or ≥ 98 wt%, and/or ≤ 100 wt%, or ≤ 99 wt%, based on the weight of the composition.
**O4]** The process of any one of A]-N] or A3]-N4] above, or the composition of any one of O]-F2] or A3]-N4] above, wherein the composition comprises component d (at least one antioxidant (AO)), and further *component d* is present in an amount ≥ 0.05 wt%, ≥ 0.1 wt%, based on the weight of the composition and/or ≤ 10 wt%, or ≤ 5.0 wt%, ≤ 2.0 wt%, or ≤ 1.5 wt%, or ≤ 1.0 wt%, or ≤ 0.8 wt%, or ≤ 0.6 wt%, or ≤ 0.4 wt%, or ≤ 0.3 wt%, or ≤ 0.2 wt%, based on the weight of the composition.
**P4]** The process of any one of A]-N] or A3]-O4] above, or the composition of any one of O]-F2] or A3]-O4] above, wherein the composition has a gel content ≤ 2.0 wt%, or ≤ 1.0 wt%, or ≤ 0.5 wt%, or ≤ 0.2 wt%, or ≤ 0.1 wt%, based on the weight of the composition. The gel content is determined by adding and sealing 0.5g (*W*ₛ) of the sample composition in a metal mesh (mesh number is 120) and weight (*W*ₜ₁) the packed sample (mesh and sample). The packed sample is put into a 250 ml glass bottle containing 100 ml xylene for 24 hours. Then, the packed sample is transferred into 500 ml flask equipped with condenser and containing 350 ml xylene. After reflux for 5 hours, the packed sample is removed from the xylene, and put into a vacuum oven and heated at 120°C for 2 hours under vacuum condition. The packed sample is removed from the oven and weighed (*W*ₜ₂). The gel content is calculated by the equation, Gel content = (*W*ₜ₂-*W*ₜ₁)/*W*ₛ*100%.
**Q4]** The process of any one of A]-N] or A3]-P4] above, or the composition of any one of O]-F2] or A3]-P4] above, wherein the composition has a melt flow rate (MFR) ≥ 1.0, or ≥ 2.0, or ≥ 3.0, or ≥ 4.0, or ≥ 4.5, or ≥ 4.8, or ≥ 5.0, and/or ≤ 100, or ≤ 50, or ≤ 20, or ≤ 10, or ≤ 8.0, or ≤ 7.5, or ≤ 7.0, or ≤ 6.5, or ≤ 6.0.
**R4]** The process of any one of A]-N] or A3]-Q4] above, or the composition of any one of O]-F2] or A3]-Q4] above, wherein the composition has a strain at break ≥ 30%, or ≥ 35%, or ≥ 40%, or ≥ 50%, or ≥ 100%, or ≥ 200%, or ≥ 300%, or ≥ 400%, or ≥ 450%, or ≥ 460%, or ≥ 470%, or ≥ 480%, and/or ≤ 2000%.
**S4]** The process of any one of A]-*N*] or A3]-R4] above, or the composition of any one of O]-F2] or A3]-R4] above, wherein the composition has a stress at break ≥ 5 MPa, ≥ 10 MPa, or ≥ 12 MPa, or ≥ 14 MPa, or ≥ 15 MPa,
**T4]** The process of any one of A]-N] or A3]-S4] above, or the composition of any one of *O*]-F2] or A3]-S4] above, wherein the composition has an Notched Izod Impact Strength at 23°C (IZOD RT) ≥ 10 J/m, or ≥ 12 J/m, or ≥ 15 J/m, or ≥ 20 J/m, or ≥ 30 J/m, or ≥ 35 J/m, or ≥ 40 J/m, or ≥ 45 J/m, or ≥ 50 J/m, or ≥ 55 J/m.
**U4]** A blend composition comprising the composition of any one of O]-F2] or A3]-T4] above, and a thermoplastic polymer, different from the olefin/silane interpolymer of component a in one or more features, such as monomer(s) types, monomer(s) amounts, monomer(s) distributions, density, melt index (I2), Mn, Mw, MWD, or any combination thereof, and further, in one or more features, such as monomer(s) types, monomer(s) amounts, monomer(s) distributions, density, melt index (I2), or any combination thereof. In a further embodiment, the thermoplastic polymer is selected from an olefin-based polymer, further an ethylene-base polymer or a propylene-based polymer, further an ethylene-based polymer.
**V4]** A blend composition comprising the composition of any one of O]-F2] or A3]-U4] above, and an ethylene/alpha-olefin interpolymer, and further an ethylene/alpha-olefin copolymer; or an ethylene/alpha-olefin multi-block interpolymer, and further an ethylene/alpha-olefin multi-block copolymer.
**W4]** A blend composition comprising the composition of any one of O]-F2] or A3]-V4] above, and a polymer selected from the following: an ethylene/propylene/nonconjugated diene interpolymer, an ethylene/alpha-olefin copolymer, an ethylene/alpha-olefin multi-block copolymer, a polyethylene homopolymer, a styrene/ethylene interpolymer (for example, a SEBS) or any combination thereof.
**X4]** The blend composition of V4] or W4] above, wherein the alpha-olefin of the ethylene/alpha-olefin interpolymer, and further copolymer, or the ethylene/alpha-olefin multi-block interpolymer, and further copolymer, is each, independently, a C3-C20 alpha-olefin, or a C3-C10 alpha-olefin, or a C3-C8 alpha-olefin,or one of propylene, 1-butene, 1-hexene or 1-octene, or one of propylene, 1-butene, or 1-octene, or one of 1-butene or 1-octene, or 1-octene.
**Y4]** A thermoplastic polyolefin (TPO) composition formed by the process of any one of A]-N] or A3]-T4] above.
**Z4]** A thermoplastic polyolefin (TPO) composition formed from the composition of any one of O]-F2] or A3]-T4] above.
**A5]** An article comprising at least one component formed from the TPO composition of Y5] or Z5] above.
**B5]** An article comprising at least one component formed from the composition of any one of O]-F2] or A3]-T4] above.
**C5]** An article comprising at least one component formed from the blend composition of any one of U4]-X4] above.
**D5]** The article of any one of A5]-C5] above, wherein the article is thermally treated at a temperature ≥ 40°C, or ≥ 50°C, or ≥ 60°C, or ≥ 70°C, or ≥ 80°C, or ≥ 90°C, or ≥ 100°C, or ≥ 110°C, or ≥ 120°C, or ≥ 130°C, or ≥ 140°C, or ≥ 150°C.
**E5]** The article of any one of any one of A5]-D5] above, wherein the article is thermally treated at a temperature ≤ 200°C, or ≤ 190°C, or ≤ 180°C, or ≤ 170°C, or ≤ 160°C.
**F5]** The article of any one of A5]-E5] above, wherein the article is an automobile.
**G5]** The article of any one of any one of A5]-E5] above, wherein the article is an instrument panel (IP), a door panel, a pillar, an airbag cover, an IP panel soft skin, a noise/vibration/harshness heavy layer or flooring (for example, NVH), a bumper facia, a trim, a fender, or a pedal.
**H5]** The article of any one of any one of A5]-E5] above, wherein the article is a solar cell module, a cable, a footwear component, an automotive part, a window profile, a tire, a tube, or a roofing membrane.

### TEST METHODS

### Carbonyl Analysis - 2,4-Dinitrophenylhydrzine High Pressure Liquid Chromatography (DNPH HPLC)

Polymer composition (200 g, pellets) was placed inside a gas bag (10 L, TEDLAR PVF, Dalian Delin Gas Packaging Co. Ltd.) along with nitrogen (5L). The bag and its contents were thermally treated in an oven (Binder FED 115, equilibrated at 65°C) for two hours, before being analyzed via the carbonyl analysis. Prior to analysis, the gas bag was washed three times with nitrogen, and a "blank gas bag" was also analyzed.

Carbonyl analysis was performed with a 4 liter sample from the bag, and using DNPH HPLC method (LOD: 0.01 mg/m³). The nitrogen gas in the bag was pumped out, for the carbonyl analysis, using an air pump. Then, the carbonyl compounds were extracted, and injected into a high-performance liquid chromatography (HPLC) column, and separated using a gradient elution. The separated compounds were then quantified by UV detection at 360 nm, with a detection limit of 0.01 mg/m³. Carbonyl analysis provided the concentration of aldehydes, such as formaldehyde, acetaldehyde, acrolein, propionaldehyde, and crotonaldehyde, present in the sample.

DNPH cartridges (CNWBOND DNPH-Silica cartridge, 350 mg, Cat. No. SEEQ-144102, Anple Co. Ltd.) were employed to absorb the carbonyls emitted from the gas bag. The sampling speed was 330 mL/min, and the sampling time was 13 minutes (sampling via an air pump). After absorption, the DNPH cartridges are eluted with 1 gram (precisely weighed) of ACN, and the ACN solution was analyzed by HPLC to quantify the carbonyls in the sample.

The standard solution, with six DNPH derivatives (TO11A carbonyl-DNPH mix, Cat. No. 48149-U, 15 ppm for each individual compound, Supelco Co. Ltd.) was diluted with acetonitrile, and the final solution (0.794 ppm wt (standard)/wt (acetonitrile)) was restored in a 2 mL vial for instrument calibration at -4°C (refrigerator). The "0.794 ppm (wt/wt)" standard solution was injected into the HPLC system as a "one point external standard" for quantification of carbonyls in the sample. The first two peaks were identified as formaldehyde and acetaldehyde according to the standard specification.

The response factor was calculated for each derivative, according to the formula: Response factor $i = \frac{Peak Area i}{0.794}$, where: Response factor i = Response factor of derivative i, Peak Area i = Peak Area of derivative i in the standard solution, and 0.794 = standard concentration of 0.794 ppm. The concentration of the aldehyde-DNPH derivative in the sample solution was calculated based on the formula: Concentration of $i = \frac{Peak Area i}{Response factor i}$, where Concentration of i = Concentration of aldehyde-DNPH derivative in the sample solution, Peak Area i = Peak Area of Derivative i in the sample solution, Response factor i = Response factor of derivative i. The HPLC conditions are shown in Table A below:

**Table A: HPLC Conditions**

| | | | | |
|---|---|---|---|---|
| Instrument: | AGILENT 1200 HPLC | | | |
| Column: | Supelco Ascentis Express C18, 15cm*4.6mm, 2.7um | | | |
| Mobile Phase: | Solvent A: 0.1 wt% H₃PO₄ in Acetonitrile (ACN) | | | |
| | Solvent B: 0.1 wt% H₃PO₄ in DI water | | | |
| Column Oven: | 15°C | | | |
| Detection: | DAD detector at 360 nm | | | |

| Gradient: | Time (mn) | A* | B* | Flow Rate (ml/min) |
|---|---|---|---|---|
| | 0 | 45 | 55 | 1 |
| | 7 | 45 | 55 | 1 |
| | 14 | 50 | 50 | 1 |
| | 20 | 85 | 15 | 1 |
| | 25 | 100 | 0 | 1 |
| Equilibration Time: | 5 min | | | |
| Injection Volume : | 10 uL | | | |

| | | | | |
|---|---|---|---|---|
| * Volume ratio of A and B. | | | | |

### Tensile

The Tensile test on dog-bone test specimens was carried out at 23°C, using a tensile machine (Zwick) at a rate of 50 mm/min. Yield strength and elongation at break were monitored by analyzing the generated stress-strain curve. The elongation at break was defined as a ratio of the distance up to the breaking point to the chuck distance (114 mm). Testing was conducted in the ASTM environment: 23°C and 50% humidity.

### Notched Izod Impact Strength

The IZOD impact test was conducted as specified in ISO 180 standard, with an impact tester (Ceast 6960.000 ) at 23°C (RT) and -30°C. The specimens (dog-bone) were kept at the test temperature for > 30 minutes prior to testing. Testing was conducted in the ASTM environment: 23°C and 50% humidity.

### Gel Permeation Chromatography

The chromatographic system consisted of a PolymerChar GPC-IR (Valencia, Spain) high temperature GPC chromatograph, equipped with an internal IR5 infra-red detector (IR5). The autosampler oven compartment was set at 160° Celsius, and the column compartment was set at 150° Celsius. The columns were four AGILENT "Mixed A" 30 cm, 20-µm (micron) linear mixed-bed columns. The chromatographic solvent was 1,2,4-trichloro-benzene, which contained 200 ppm of butylated hydroxytoluene (BHT). The solvent source was nitrogen sparged. The injection volume used was 200 microliters, and the flow rate was 1.0 milliliters/minute.

Calibration of the GPC column set was performed with 21 narrow molecular weight distribution polystyrene standards, with molecular weights ranging from 580 to 8,400,000, and which were arranged in six "cocktail" mixtures, with at least a decade of separation between individual molecular weights. The standards were purchased from Agilent Technologies. The polystyrene standards were prepared at "0.025 grams in 50 milliliters" of solvent, for molecular weights equal to, or greater than, 1,000,000, and at "0.05 grams in 50 milliliters" of solvent, for molecular weights less than 1,000,000. The polystyrene standards were dissolved at 80 degrees Celsius, with gentle agitation, for 30 minutes. The polystyrene standard peak molecular weights were converted to polyethylene molecular weights using Equation 1 (as described in Williams and Ward, J. Polym. Sci., Polym. Let., 6, 621 (1968)): ${M}_{polyethylene} = A \times {\left({M}_{polystyrene}\right)}^{B}$ (EQ1), where M is the molecular weight, A has a value of 0.4315 and B is equal to 1.0.

A fifth order polynomial was used to fit the respective polyethylene-equivalent calibration points. A small adjustment to A (from approximately 0.375 to 0.445) was made to correct for column resolution and band-broadening effects, such that linear homopolymer polyethylene standard is obtained at 120,000 Mw. The total plate count of the GPC column set was performed with decane (prepared at "0.04 g in 50 milliliters" of TCB, and dissolved for 20 minutes with gentle agitation.) The plate count (Equation 2) and symmetry (Equation 3) were measured on a 200 microliter injection according to the following equations: $Plate Count = 5.54 ∗ {\left(\frac{\left({RV}_{Peak Max}\right.}{Peak Width at \frac{1}{2} height}\right)}^{2}$ (EQ2), where RV is the retention volume in milliliters, the peak width is in milliliters, the peak max is the maximum height of the peak, and ½ height is ½ height of the peak maximum; and $Symmetry = \frac{\left(Rear Peak {RV}_{one tenth height}-{RV}_{Peak max}\right)}{\left({RV}_{{}_{Peak max}}-Front Peak {RV}_{{}_{one tenth height}}\right)}$ (EQ3), where RV is the retention volume in milliliters, and the peak width is in milliliters, Peak max is the maximum position of the peak, one tenth height is 1/10 height of the peak maximum, and where rear peak refers to the peak tail at later retention volumes than the peak max, and where front peak refers to the peak front at earlier retention volumes than the peak max. The plate count for the chromatographic system should be greater than 18,000, and symmetry should be between 0.98 and 1.22.

Samples were prepared in a semi-automatic manner with the PolymerChar "Instrument Control" Software, wherein the samples were weight-targeted at 2 mg/ml, and the solvent (contained 200 ppm BHT) was added to a pre nitrogen-sparged, septa-capped vial, via the PolymerChar high temperature autosampler. The samples were dissolved for two hours at 160° Celsius under "low speed" shaking.

The calculations of Mn_{(GPC)}, Mw_{(GPC)}, and Mz_{(GPC)} were based on GPC results using the internal IR5 detector (measurement channel) of the PolymerChar GPC-IR chromatograph according to Equations 4-6, using PolymerChar GPCOne^{™} software, the baseline-subtracted IR chromatogram at each equally-spaced data collection point (i), and the polyethylene equivalent molecular weight obtained from the narrow standard calibration curve for the point (i) from Equation 1. Equations 4-6 are as follows: $M {n}_{\left(G P C\right)} = \frac{{\sum }_{}^{i} I {R}_{i}}{{\sum }_{}^{i} \left(\frac{I {R}_{i}}{{M}_{p o l y e t h y l e n {e}_{i}}}\right)} , M {w}_{\left(G P C\right)} = \frac{{\sum }_{}^{i} \left(I {R}_{i} ∗ {M}_{p o l y e t h y l e n {e}_{i}}\right)}{{\sum }_{}^{i} I {R}_{i}}$ (EQ4), and ${Mz}_{\left(GPC\right)} = \frac{{Σ}^{i} \left({IR}_{i}∗{{M}_{{polyethylene}_{i}}}^{2}\right)}{{Σ}^{i} \left({IR}_{i}∗{M}_{{polyethylene}_{i}}\right)}$ (EQ6).

In order to monitor the deviations over time, a flowrate marker (decane) was introduced into each sample, via a micropump controlled with the PolymerChar GPC-IR system. This flowrate marker (FM) was used to linearly correct the pump flowrate (Flowrate(nominal)) for each sample, by RV alignment of the respective decane peak within the sample (RV(FM Sample)), to that of the decane peak within the narrow standards calibration (RV(FM Calibrated)). Any changes in the time of the decane marker peak were then assumed to be related to a linear-shift in flowrate (Flowrate(effective)) for the entire run. To facilitate the highest accuracy of a RV measurement of the flow marker peak, a least-squares fitting routine was used to fit the peak of the flow marker concentration chromatogram to a quadratic equation. The first derivative of the quadratic equation was then used to solve for the true peak position. After calibrating the system, based on a flow marker peak, the effective flowrate (with respect to the narrow standards calibration) was calculated as Equation 7: Flowrate(effective) = Flowrate(nominal) * (RV(FM Calibrated) / RV(FM Sample)) (EQ7). Processing of the flow marker peak was done via the PolymerChar GPCOne^{™} Software. Acceptable flowrate correction is such that the effective flowrate should be within +/-0.7% of the nominal flowrate.

### Melt Index or Melt Flow Rate of Polymer

The melt index I2 (or MI) of an ethylene-based polymer is measured in accordance with ASTM D-1238, condition 190°C/2.16 kg (melt index I10 at 190°C/10.0 kg). The I10/I2 was calculated from the ratio of I10 to the I2. The melt flow rate MFR of a propylene-based polymer is measured in accordance with ASTM D-1238, condition 230°C/2.16 kg.

### Melt Flow Rate of Composition

Melt flow rate (MFR) of a composition (see expt. section) was measured using pellets in accordance with ASTM D-1238, condition 230°C/2.16 kg.

### Density of Polymer

ASTM D4703 was used to make a polymer plaque for density analysis. ASTM D792, Method B, was used to measure the density of each polymer.

### NMR Characterization of Terpolymers

For ¹³C NMR experiments, samples were dissolved, in 10 mm NMR tubes, in tetrachloroethane-d₂ (with or without 0.025 M Cr(acac)₃). The concentration was approximately 300 mg/2.8 mL. Each tube was then heated in a heating block set at 110°C. The sample tube was repeatedly vortexed and heated to achieve a homogeneous flowing fluid. The ¹³C NMR spectrum was taken on a BRUKER AVANCE 600 MHz spectrometer, equipped with a 10 mm C/H DUAL cryoprobe. The following acquisition parameters were used: 60 seconds relaxation delay, 90 degree pulse of 12.0 µs, 256 scans. The spectrum was centered at 100 ppm, with a spectral width of 250 ppm. All measurements were taken without sample spinning at 110°C. The ¹³C NMR spectrum was referenced to "74.5 ppm" for the resonance peak of the solvent. For a sample with Cr, the data was taken with a "7 seconds relaxation delay" and 1024 scans. The "mol% silane (silane monomer)" was calculated based on the integration of SiMe carbon resonances, versus the integration of CH2 carbons associated with ethylene units and CH/CH3 carbons associated with octene units. The "mol% octene (or other alpha-olefin)" was similarly calculated with reference to the CH/CH3 carbons associated with octene (or other alpha-olefin).

For ¹H NMR experiments, each sample was dissolved, in 8 mm NMR tubes, in tetrachloroethane-d₂ (with or without 0.001 M Cr(acac)₃). The concentration was approximately100 mg/1.8 mL. Each tube was then heated in a heating block set at 110°C. The sample tube was repeatedly vortexed and heated to achieve a homogeneous flowing fluid. The ¹H NMR spectrum was taken on a BRUKER AVANCE 600 MHz spectrometer, equipped with a 10 mm C/H DUAL cryoprobe. A standard, single pulse ¹H NMR experiment was performed. The following acquisition parameters were used: 70 seconds relaxation delay, 90 degree pulse of 17.2 µs, 32 scans. The spectrum was centered at 1.3 ppm, with a spectral width of 20 ppm. All measurements were taken, without sample spinning, at 110°C. The ¹H NMR spectrum was referenced to "5.99 ppm" for the resonance peak of the solvent (residual protonated tetrachloroethane). For a sample with Cr, the data was taken with a "16 seconds relaxation delay" and 128 scans. The "mol% silane (silane monomer)" was calculated based on the integration of SiMe proton resonances, versus the integration of CH2 protons associated with ethylene units and CH3 protons associated with octene units.

### Differential Scanning Calorimetry (DSC)

Differential Scanning Calorimetry (DSC) is used to measure Tₘ, T_{c}, T_{g} and crystallinity in ethylene-based (PE) polymer samples and propylene-based (PP) polymer samples. Each sample (0.5 g) was compression molded into a film, at 34.5 MPa (5000 psi), 190°C, for two minutes. About 5 to 8 mg of film sample was weighed and placed in a DSC pan. The lid was crimped on the pan to ensure a closed atmosphere. Unless otherwise stated, the sample pan was placed in a DSC cell, and then heated, at a rate of 10°C/min, to a temperature of 180°C for PE (230°C for PP). The sample was kept at this temperature for three minutes. Then the sample was cooled at a rate of 10°C/min to -90°C for PE (-60°C for PP), and kept isothermally at that temperature for three minutes. The sample was next heated at a rate of 10°C/min, until complete melting (second heat). Unless otherwise stated, melting point (Tₘ) and the glass transition temperature (T_{g}) of each polymer were determined from the second heat curve, and the crystallization temperature (T_{c}) was determined from the first cooling curve. The respective peak temperatures for the Tₘ and the T_{c} are typically recorded. The percent crystallinity can be calculated by dividing the heat of fusion (H_{f}), determined from the second heat curve, by a theoretical heat of fusion of 292 J/g for PE (165 J/g for PP), and multiplying this quantity by 100 (for example, % cryst. = (H_{f} / 292 J/g) x 100 (for PE)).

### EXPERIMENTAL

### Polymers and Additives

YUPLENE BX3900 (PP), a highly crystalline propylene impact copolymer available from SK Company. Density = 0.90 g/cm³ (ASTM D792), MFR = 60g/10min (ASTM D1238, at 230°C/2.16 kg);
ENGAGE 8100 Polyolefin Elastomer available from The Dow Chemical Company: ethylene/1-octene copolymer, density = 0.870 g/cm³ (ASTM D792), I2 = 1.0 g/10min (ASTM D1238, at 190°C/2.16 kg), Tm = 60.0°C, Tg = -52.0°sC;
Talc: TALC HTP-ULTRA 5L, available from AIHAI-IMI;
Carbon Black (CB) Masterbatch: UN2014 available Cabot;
Antioxidant (AO): IRGANOX B225, available from BASF;
SiH POE D: an ethylene/octene/silane terpolymer, density = 0.873 g/cc, I2 = 0.8 g/10min, 1.5 wt% of HDMS;
SiH POE E: an ethylene/octene/silane terpolymer, density = 0.870 g/cc, I2 = 0.8 g/10min, 3.4 wt% of HDMS;
POE D: an ethylene/octene copolymer, density = 0.871 g/cc, I2 = 1.2 g/10min.

### Polymer Syntheses and Properties

The interpolymers SiH-POE D, SiH-POE E, and POE D were each prepared in a one gallon, polymerization reactor that was hydraulically full, and operated at steady state conditions. The solvent was ISOPAR-E, supplied by the ExxonMobil Chemical Company. The 5-hexenyldimethylsilane (HDMS) supplied by Gelest, was used as a termonomer, and was purified over AZ-300 alumina supplied by UOP Honeywell, prior to use. HDMS was fed to the reactor as a 22 wt% solution in ISOPAR-E. The reactor temperature was measured at or near the exit of the reactor. The interpolymer was isolated and pelletized. Polymerization conditions are listed in Table 1B-1D, and catalysts and co-catalysts are listed in Table 1A. The polymer properties of each ethylene/octene/silane terpolymer (SiH-POE) and the ethylene/octene copolymer (POE) are shown in Tables 2A and 2B.

**Table 1A: Catalysts and Co-catalysts**

| Catalyst (CAT) | Description |
|---|---|
| PE CAT 2 (WO2012/027448) | 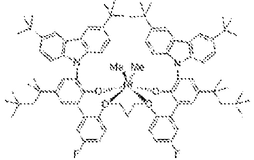 |
| Cocatalyst | |
| CoCAT-1 | A mixture of methyldi(C14-18 alkyl)ammonium salts of tetrakis(pentafluorophenyl)borate, prepared by reaction of a long chain trialkylamine (Armeen^{™} M2HT, available from Akzo-Nobel, Inc.), HCl and Li[B(C6F5)4], substantially as disclosed in USP 5,919,983, Ex. 2 (no further purification performed) (Boulder Scientific). |
| CoCAT-2 | Modified methylalumoxane (MMAO) Type 3A (no further purification performed) (Akzo Nobel). |

**Table 1B: Polymerization Conditions to Produce Noted SiH-POEs and POE-D**

| | Reactor Temp., °C | Reactor Pressure, MPa (psig) | Solvent, kg/hr (lb/hr) | Ethylene, kg/hr (lb/hr) | Octene, kg/hr (lb/hr) | HDMS, kg/h (lb/h) | Hydrogen, sccm | ethylene conversion, % |
|---|---|---|---|---|---|---|---|---|
| SiH-POE D | 170 | 5.03 (729) | 17 (38) | 1.7 (3.8) | 2.3 (5.0) | 0.6 (1.4) | 192 | 83 |
| SiH-POE E | 168 | 5.01 (726) | 16 (36) | 1.7 (3.8) | 2.3 (5.0) | 1.3 (2.9) | 193 | 82 |
| POE D | 170 | 5.02 (728) | 18 (39) | 1.7 (3.8) | 2.4 (5.4) | 0 (0) | 162 | 83 |

**Table 1C: Catalyst Feed Flows and Efficiency**

| | Catalyst | Catalyst Solution Flow, kg/hr (lb/hr) | Catalyst Solution Metal Conc., ppm* | Overall Catalyst Efficiency, (g interpolymer/g total catalyst metal) |
|---|---|---|---|---|
| SiH-POE D | PE CAT 2 | 0.15 (0.33) | 3.96 | 3,911,000 |
| SiH-POE E | PE CAT 2 | 0.26 (0.57) | 3.96 | 2,385,000 |
| POE D | PE CAT 2 | 0.15 (0.33) | 3.96 | 3,939,000 |

| | | | | |
|---|---|---|---|---|
| *The "ppm" amount based on the weight of the respective catalyst feed solution. | | | | |

**Table 1D: Cocatalyst Feed Flows**

| | CoCAT 1 Solution Flow, kg/hr (lb/hr) | CoCAT 1 Solution Conc., ppm* | CoCAT 2 Solution Flow, kg/hr (lb/hr) | CoCAT 2 Solution Conc. ppm Al** |
|---|---|---|---|---|
| SiH-POE D | 0.15 (0.34) | 31.25 | 0.14 (0.30) | 32.2 |
| SiH-POE E | 0.26 (0.58) | 31.25 | 0.24 (0.53) | 32.2 |
| POE D | 0.15 (0.33) | 31.25 | 0.14 (0.31) | 32.2 |

| | | | | |
|---|---|---|---|---|
| *The "ppm" amount based on the weight of the co-catalyst feed solution. **The "ppm" amount of Al based on the weight of the co-catalyst feed solution. | | | | |

**Table 2A: Polymer Properties**

| Resin Description | | | | | Silane Information | | |
|---|---|---|---|---|---|---|---|
| Resin | Density (g/cc) | MI (dg/min) | Octene (mol%) | Tₘ (C°) | Silane Type | Silane mol%* | Silane wt%** |
| SiH-POE D | 0.873 | 0.8 | 11.0 | 64.5 | HDMS | 0.4 | 1.5 |
| SiH-POE E | 0.87 | 0.8 | 11.0 | 61.9 | HDMS | 0.9 | 3.4 |
| POE D | 0.87 | 1.2 | 12.0 | 61.9 | - | - | - |

| | | | | | | | |
|---|---|---|---|---|---|---|---|
| *Mol% silane based on total moles of monomers in polymer, and determined by 1H NMR. **Wt% silane calculated from the mol%, and based on the weight of the interpolymer. HDMS = 5-Hexenyldimethylsilane. | | | | | | | |

**Table 2B: Polymer Properties (Conventional GPC)**

| Resin | Mn (kg/mol) | Mw (kg/mol) | Mw/Mn |
|---|---|---|---|
| SiH-POE D | 49 | 108 | 2.2 |
| SiH-POE E | 45 | 100 | 2.2 |
| POE D | 52 | 112 | 2.2 |

### Study 1 - Carbonyl Analysis

### Preparation of Polymer Compositions

Polymer compositions, as shown in Table 3 below, were formed by extrusion. Comparative CE-1, represents a typical formulation for an automotive interior instrumental panel, with 20 wt% talc, and containing 64.8 wt% BX3900 and 15 wt% ENGAGE 8100, and in which ENGAGETM 8100 acts as the impact modifier. Inventive IE-1 is similar to CE-1, except that it contained SiH POE E, in place of ENGAGE 8100.

**Table 3: Polymer Compositions (wt%)**

| | | HDMS* | CE-1 | IE-1 | CE-2 | IE-2 | CE-3 | IE-3 |
|---|---|---|---|---|---|---|---|---|
| PP | BX3900 | | 64.8 | 64.8 | 48.8 | 48.8 | 48.8 | 48.8 |
| POE | ENGAGE 8100 | | 15 | | 30 | | | |
| POE D | | 0 (No SiH) | | | | | 30 | |
| SiH-POE D | | 2(1.5 wt%) | | | | 30 | | |
| SiH-POE E | | 5 (3.4 wt%) | | 15 | | | | 30 |
| Talc | HPT-ULTRA 5L | | 20 | 20 | 20 | 20 | 20 | 20 |
| AO | B225 | | 0.2 | 0.2 | 0.2 | 0.2 | 0.2 | 0.2 |
| CB | UN2014 | | | | 1 | 1 | 1 | 1 |

| | | | | | | | | |
|---|---|---|---|---|---|---|---|---|
| *Loading in POE (wt% in terpolymer as determined by 1H NMR). | | | | | | | | |

Each composition was compounded in a co-rotating twin screw extruder with a diameter of 18 mm and an L/D of 40. A general purposed screw configuration was used, and the profile temperatures were set as shown below in Table 4. The screw rotated at 200 RPM, and a "20 kg/h" output was achieved during compounding. The extruded composition was granulated into small pellets by a side cutter granulator. Pellets were analyzed for carbonyl content after a 48 hour period, at room temperature (23°C) and ambient atmosphere.

**Table 4: Extrusion Temperatures**

| Barrels | 1 | 2 | 3 | 4 | 5 | 6 | 7 | 8 | 9 | 10 |
|---|---|---|---|---|---|---|---|---|---|---|
| °C | 140 | 180 | 200 | 200 | 200 | 200 | 200 | 200 | 200 | 180 |

Carbonyl test results of the formulated compositions are listed in Table 5. It can be seen that for aldehydes, like formaldehyde, acetaldehyde and propionaldehyde, there is a significant difference in the aldehyde content between the inventive compositions and the comparative compositions. Overall, the inventive compositions (TPO) had a significantly decrease in carbonyl content as compared with the respective comparative compositions. It is believed that the SiH-POE is able to reduce the aldehyde levels during the extrusion of the composition, since most of the oxygenates, including aldehydes and ketones, are generated during the thermal treatment process.

**Table 5: Carbonyl Test Results**

| | CE-1 | IE-1 | | CE-2 | IE-2 | | CE-3 | IE-3 |
|---|---|---|---|---|---|---|---|---|
| Formaldehyde (ug/m³) | 67 | 20 | | 29 | 16 | | 104 | 103 |
| Acetaldehyde (ug/m³) | 1866 | 38 | | 4454 | 2666 | | 2036 | 1148 |
| Acrolein (ug/m³) | < LOQ | < LOQ | | 3 | 4 | | 28 | 20 |
| Propionaldehyde (ug/m³) | 405 | 7 | | 160 | 104 | | 652 | 261 |
| Total Aldehyde Content (ug/m³) | 2338 | 65 | | 4646 | 2790 | | 2820 | 1532 |
| Reduced Total Aldehyde Content (%)* | - | 97.2 | | - | 39.9 | | - | 45.7 |

| | | | | | | | | |
|---|---|---|---|---|---|---|---|---|
| Note, < LOQ = less than the limit of quantitation of the HPLC. *Reduced Total Aldehyde Content (%) = {[(total aldehyde content in CE-1) - (total aldehyde content in 1E-1)] / (total aldehyde content in CE-1)} x 100. Total aldehyde content = the sum of formaldehyde, acetaldehyde, acrolein and propionaldehyde. Note, IE-1 compared against CE-1, IE-2 compared against CE-2, and IE-3 compared against CE-3. | | | | | | | | |

### Study 2 - Mechanical Properties

Each composition (pellets) was injection molded using a FANUC S-2000I B series injection molding machine with a 28 mm diameter. The injection profile temperature was set at 204°C, and the mold temperature was set at 38°C. The injection molding speed was 26 mm/s, with a screw rotation at 80 RPM. The injection molding condition was fixed for all the compositions. Dog-bone test specimens (10) for each composition were made according to ISO 527. Mechanical and impact properties are shown in Table 6. For each property, the average of 10 test specimens was reported. As seen in Table 6, each inventive composition maintains excellent mechanical properties and impact properties, and has especially good strain at break and room temperature impact strength, each as compared to the respective comparative composition.

**Table 6: Mechanical and Impact Properties**

| | Unit | CE-1 | IE-1 | CE-2 | IE-2 | CE-3 | IE-3 |
|---|---|---|---|---|---|---|---|
| Eₜ(Tensile modulus), MPa | MPa | 2098 | 2025 | 1316 | 1115 | 1294 | 1135 |
| STD. | | 20 | 36 | 38 | 17 | 21 | 55 |
| s_{B}(Stress at break), | MPa | 14.2 | 15.1 | 14.9 | 14.9 | 15.6 | 15.1 |
| STD. | | 1.2 | 0.5 | 0.1 | 0.2 | 0.2 | 0.3 |
| e_{B}(Strain at break) | % | 33 | 35 | 474 | 544 | 475 | 485 |
| STD. | | 7 | 14 | 5 | 19 | 10 | 10 |
| MFR | g/10min | 10.3 | 8.2 | 6.3 | 5.1 | 5.3 | 5.5 |
| IZOD (RT) | J/m | 9.7 | 12.3 | 57.2 | 58.9 | 57.6 | 58.2 |
| STD. | | 0.6 | 0.5 | 0.9 | 0.4 | 1 | 0.9 |
| IZOD (-30°C) | J/m | 3.6 | 3.7 | 20.9 | 19.7 | 20.4 | 20 |
| STD | | 0.3 | 0.1 | 2.5 | 1 | 1.7 | 1.8 |

## Claims

1. A process to form a composition, the process comprising thermally treating at least the following *components:*
*a)* an olefin/silane interpolymer comprising at least one Si-H group, wherein the term "olefin/silane interpolymer" refers to a random interpolymer that comprises, in polymerized form, at least 50 wt%, or a majority weight percent of an olefin (based on the weight of the interpolymer), and a silane monomer and is formed by the copolymerization of at least the olefin and the silane monomer, and
*b)* a propylene-based polymer, or a propylene-based composition that comprises a propylene-based polymer, wherein the olefin/silane interpolymer is formed in the presence of a bis-biphenyloxy metal complex, wherein the composition does not comprise a peroxide, and wherein the term "thermally treating" refers to the application of heat.

2. The process of claim 1, wherein the components are mixed during the thermal treatment.

3. The process of claim 1, wherein the composition (C) has a reduced total aldehyde content, as compared to a composition (SC) that comprises the same *components,* except that *component a* is replaced with an olefin-based polymer that contains the same monomer types as *component* a, except the olefin-based polymer does not contain the "at least one Si-H group," and wherein the olefin-based polymer has a density that is within ± 0.005 g/cc of the density of *component a,* and has a melt index (I2) that is within ± 0.5 g/10 min of the melt index of *component a;* and wherein the reduced total aldehyde content is determined from the following Equation Y: Reduced Total Aldehyde Content (%) = {[(total aldehyde content in (SC)) - (total aldehyde content in (C))] / (total aldehyde content in (SC))} x 100;

4. The process of claim 3, wherein the composition has a reduced total aldehyde content (%) that is ≥ 40%, as determined from Equation Y.

5. The process of any one of claims 1-4, wherein the olefin/silane interpolymer of *component a* is an ethylene/alpha-olefin/silane interpolymer.

6. The process of any one of claims 1-5, wherein *component a* has a density from 0.855 g/cc to 0.940 g/cc.

7. The process of any one of claims 1-6, wherein, for *component b,* the propylene-based polymer, or the propylene-based polymer of the propylene-based composition, is each selected from the following: a) a polypropylene homopolymer, b) a propylene/ethylene interpolymer, or c) a propylene/alpha-olefin interpolymer.

8. The process of any one of claims 1-7, wherein *component b* has a density from 0.870 g/cc to 0.930 g/cc.

9. The process of any one of claims 1-8, wherein the composition is thermally treated at a temperature from 140°C to 250°C.

10. A composition comprising at least the following *components:*
*a)* an olefin/silane interpolymer comprising at least one Si-H group, wherein the term "olefin/silane interpolymer" refers to a random interpolymer that comprises, in polymerized form, at least 50 wt%, or a majority weight percent of an olefin (based on the weight of the interpolymer), and a silane monomer and is formed by the copolymerization of at least the olefin and the silane monomer, and
*b)* a propylene-based polymer, or a propylene-based composition that comprises a propylene-based polymer wherein the olefin/silane interpolymer is formed in the presence of a bis-biphenyloxy metal complex, and wherein the composition does not comprise a peroxide.

11. The composition of claim 10, wherein the olefin/silane interpolymer of *component a* is an ethylene/alpha-olefin/silane interpolymer.

12. The composition of claim 10 or claim 11, wherein *component a* has a density from 0.855 g/cc to 0.940 g/cc.

13. The composition of any one of claims 10-12, wherein, for *component b,* the propylene-based polymer, or the propylene-based polymer of the propylene-based composition, is each selected from the following: a) a polypropylene homopolymer, b) a propylene/ethylene interpolymer, or c) a propylene/alpha-olefin interpolymer.

14. The composition of any one of claims 10-13, wherein silane of the olefin/silane interpolymer is derived from a silane monomer selected from Formula 1: A-(SiBC-O)x-Si-EFH (Formula 1), where A is an alkenyl group, B is a hydrocarbyl group or hydrogen, C is a hydrocarbyl group or hydrogen, and where B and C may be the same or different;
H is hydrogen, and x ≥ 0;
E is a hydrocarbyl group or hydrogen, F is a hydrocarbyl group or hydrogen, and where E and F may be the same or different.

15. The composition of claim 14, wherein Formula 1 is selected from the following compounds s1) through s16) below: 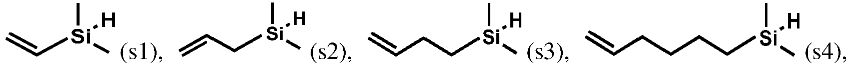 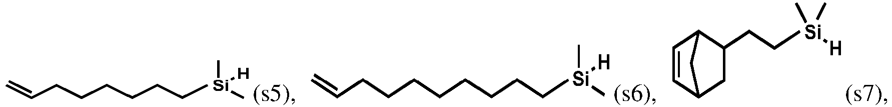 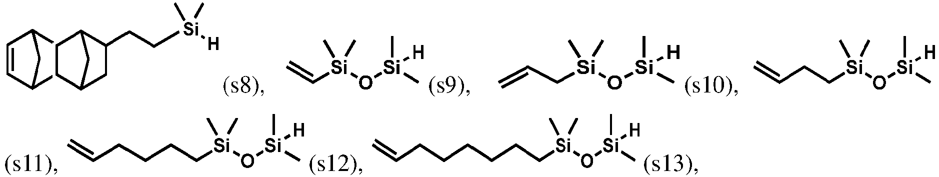 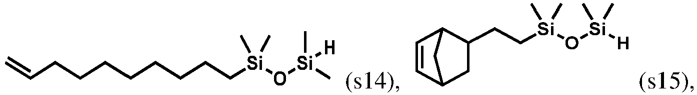 or

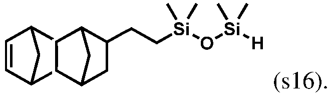

## Patentansprüche

1. Verfahren, um eine Zusammensetzung auszubilden, das Verfahren umfassend ein thermisches Behandeln von mindestens den folgenden *Komponenten*:
a) einem Olefin/Silan-Interpolymer, umfassend mindestens eine Si-H-Gruppe, wobei sich der Begriff "Olefin/Silan-Interpolymer" auf ein statistisches Interpolymer bezieht, das in polymerisierter Form mindestens zu 50 Gew.-% oder zu einem überwiegenden Anteil in Gewichtsprozent ein Olefin (basierend auf dem Gewicht des Interpolymers) und ein Silanmonomer umfasst und durch die Copolymerisation von mindestens dem Olefin und dem Silanmonomer ausgebildet wird, und
b) einem Polymer auf Propylenbasis oder einer Zusammensetzung auf Propylenbasis, die ein Polymer auf Propylenbasis umfasst, wobei das Olefin/Silan-Interpolymer in der Gegenwart eines Bisbiphenyloxymetallkomplexes ausgebildet wird, wobei die Zusammensetzung kein Peroxid umfasst und wobei sich der Begriff "thermisches Behandeln" auf die Anwendung von Wärme bezieht.

2. Verfahren nach Anspruch 1, wobei die Komponenten während der thermischen Behandlung gemischt werden.

3. Verfahren nach Anspruch 1, wobei die Zusammensetzung (C) einen reduzierten Gesamtaldehydgehalt im Vergleich zu einer Zusammensetzung (SC) aufweist, die die gleichen *Komponenten* umfasst, mit der Ausnahme, dass *Komponente a* durch ein Polymer auf Olefinbasis ersetzt ist, das die gleichen Monomerarten wie *Komponente a* enthält, mit der Ausnahme, dass das Polymer auf Olefinbasis die "mindestens eine Si-H-Gruppe" nicht enthält, und wobei das Polymer auf Olefinbasis eine Dichte aufweist, die innerhalb von ± 0,005 g/cm³ der Dichte von *Komponente a* liegt, und einen Schmelzindex (I2) aufweist, der innerhalb von ± 0,5 g/10 min des Schmelzindex von *Komponente a* liegt; und wobei der reduzierte Gesamtaldehydgehalt aus der folgenden Gleichung Y bestimmt wird: Reduzierter $Gesamtaldehydgehalt \left(%\right) = \left\{\left[\left(Gesamtaldehydgehalt in \left(SC\right)\right)-\left(\begin{matrix}Gesamtaldehydge \\ halt in \left(C\right)\end{matrix}\right)\right]/\left(Gesamtaldehydgehalt in \left(SC\right)\right)\right\} \times 100 ;$

4. Verfahren nach Anspruch 3, wobei die Zusammensetzung einen reduzierten Gesamtaldehydgehalt (%) aufweist, der ≥ 40 % beträgt, wie aus Gleichung Y bestimmt.

5. Verfahren nach einem der Ansprüche 1 bis 4, wobei das Olefin/Silan-Interpolymer der *Komponente a* ein Ethylen/alpha-Olefin/Silan-Interpolymer ist.

6. Verfahren nach einem der Ansprüche 1 bis 5, wobei *Komponente a* eine Dichte von 0,855 g/cm³ bis 0,940 g/cm³ aufweist.

7. Verfahren nach einem der Ansprüche 1 bis 6, wobei für *Komponente b* das Polymer auf Propylenbasis oder das Polymer auf Propylenbasis der Zusammensetzung auf Propylenbasis jeweils aus den Folgenden ausgewählt ist: a) einem Polypropylenhomopolymer, b) einem Propylen/Ethylen-Interpolymer oder c) einem Propylen/alpha-Olefin-Interpolymer.

8. Verfahren nach einem der Ansprüche 1 bis 7, wobei *Komponente b* eine Dichte von 0,870 g/cm³ bis 0,930 g/cm³ aufweist.

9. Verfahren nach einem der Ansprüche 1 bis 8, wobei die Zusammensetzung bei einer Temperatur von 140 °C bis 250 °C thermisch behandelt wird.

10. Zusammensetzung, umfassend mindestens die folgenden *Komponenten*:
a) ein Olefin/Silan-Interpolymer, umfassend mindestens eine Si-H-Gruppe, wobei sich der Begriff "Olefin/Silan-Interpolymer" auf ein statistisches Interpolymer bezieht, das in polymerisierter Form mindestens zu 50 Gew.-% oder zu einem überwiegenden Anteil in Gewichtsprozent ein Olefin (basierend auf dem Gewicht des Interpolymers) und ein Silanmonomer umfasst und durch die Copolymerisation von mindestens dem Olefin und dem Silanmonomer ausgebildet wird, und
b) ein Polymer auf Propylenbasis oder eine Zusammensetzung auf Propylenbasis, die ein Polymer auf Propylenbasis umfasst, wobei das Olefin/Silan-Interpolymer in der Gegenwart eines Bisbiphenyloxymetallkomplexes ausgebildet wird und wobei die Zusammensetzung kein Peroxid umfasst.

11. Zusammensetzung nach Anspruch 10, wobei das Olefin/Silan-Interpolymer der *Komponente a* ein Ethylen/alpha-Olefin/Silan-Interpolymer ist.

12. Zusammensetzung nach Anspruch 10 oder 11, wobei *Komponente a* eine Dichte von 0,855 g/cm³ bis 0,940 g/cm³ aufweist.

13. Zusammensetzung nach einem der Ansprüche 10 bis 12, wobei für *Komponente b* das Polymer auf Propylenbasis oder das Polymer auf Propylenbasis der Zusammensetzung auf Propylenbasis jeweils aus den Folgenden ausgewählt ist: a) einem Polypropylenhomopolymer, b) einem Propylen/Ethylen-Interpolymer oder c) einem Propylen/alpha-Olefin-Interpolymer.

14. Zusammensetzung nach einem der Ansprüche 10 bis 13, wobei das Silan des Olefin/Silan-Interpolymers von einem Silanmonomer stammt, das aus Formel 1 ausgewählt ist: A-(SiBC-O)x-Si-EFH (Formel 1), wobei A eine Alkenylgruppe ist, B eine Hydrocarbylgruppe oder Wasserstoff ist, C eine Hydrocarbylgruppe oder Wasserstoff ist und wobei B und C gleich oder verschieden sein können;
H Wasserstoff und x > 0 ist; E eine Hydrocarbylgruppe oder Wasserstoff ist, F eine Hydrocarbylgruppe oder Wasserstoff ist und wobei E und F gleich oder verschieden sein können.

15. Verfahren nach Anspruch 14, wobei die Formel 1 aus den folgenden nachstehenden Verbindungen s1) bis einschließlich s16) ausgewählt ist: 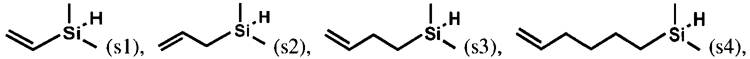 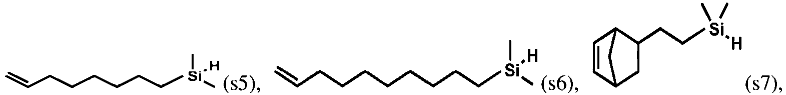 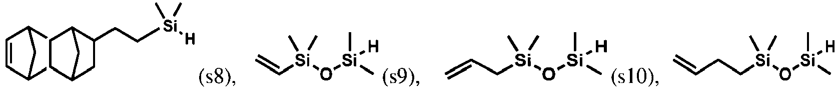 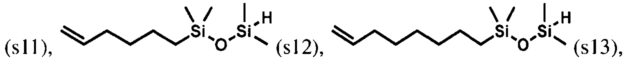 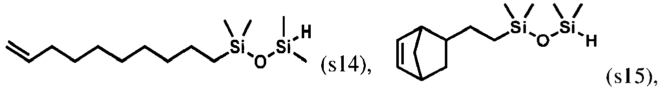 oder

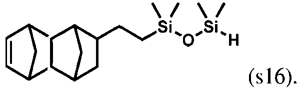

## Revendications

1. Procédé permettant de former une composition, le procédé comprenant le traitement thermique d'au moins les *composants* suivants *:*
a) un interpolymère oléfine/silane comprenant au moins un groupe Si-H, dans lequel le terme « interpolymère oléfine/silane » fait référence à un interpolymère aléatoire qui comprend, sous forme polymérisée, au moins 50 % en poids, ou un pourcentage en poids majoritaire d'une oléfine (sur la base du poids de l'interpolymère), et un monomère silane, et est formé par la copolymérisation d'au moins l'oléfine et le monomère silane, et
b) un polymère à base de propylène, ou une composition à base de propylène qui comprend un polymère à base de propylène, dans lequel l'interpolymère oléfine/silane est formé en présence d'un complexe métallique bis-biphényloxy, dans lequel la composition ne comprend pas de peroxyde, et dans lequel le terme « traitement thermique » fait référence à l'application de chaleur.

2. Procédé selon la revendication 1, dans lequel les composants sont mélangés pendant le traitement thermique.

3. Procédé selon la revendication 1, dans lequel la composition (C) a une teneur totale réduite en aldéhyde, par comparaison avec une composition (SC) qui comprend les mêmes *composants*, à l'exception que le *composant a* est remplacé par un polymère à base d'oléfine qui contient les mêmes types de monomères que le *composant a*, à l'exception que le polymère à base d'oléfine ne contient pas l'« au moins un groupe Si-H », et dans lequel le polymère à base d'oléfine a une masse volumique qui se situe à ± 0,005 g/cm³ de la masse volumique du *composant a*, et a un indice de fusion (I2) qui se situe à ± 0,5 g/10 min de l'indice de fusion du *composant a* ; et dans lequel la teneur totale réduite en aldéhyde est déterminée à partir de l'Équation Y suivante : teneur totale réduite en aldéhyde (%) = {[(teneur totale en aldéhyde dans (SC)) - (teneur totale en aldéhyde dans (C))] / (teneur totale en aldéhyde dans (SC))} x 100 ;

4. Procédé selon la revendication 3, dans lequel la composition a une teneur totale réduite en aldéhyde (%) qui est ≥ 40 %, telle que déterminée à partir de l'Équation Y.

5. Procédé selon l'une quelconque des revendications 1 à 4, dans lequel l'interpolymère oléfine/silane du *composant a* est un interpolymère éthylène/alpha-oléfine/silane.

6. Procédé selon l'une quelconque des revendications 1 à 5, dans lequel le *composant a* a une masse volumique allant de 0,855 g/cm³ à 0,940 g/cm³.

7. Procédé selon l'une quelconque des revendications 1 à 6, dans lequel, pour le *composant b*, chacun du polymère à base de propylène, ou du polymère à base de propylène de la composition à base de propylène, est choisi parmi ce qui suit : a) un homopolymère de polypropylène, b) un interpolymère propylène/éthylène, ou c) un interpolymère propylène/alpha-oléfine.

8. Procédé selon l'une quelconque des revendications 1 à 7, dans lequel le *composant b* a une masse volumique allant de 0,870 g/cm³ à 0,930 g/cm³.

9. Procédé selon l'une quelconque des revendications 1 à 8, dans lequel la composition est traitée thermiquement à une température allant de 140 °C à 250 °C.

10. Composition comprenant au moins les *composants* suivants :
a) un interpolymère oléfine/silane comprenant au moins un groupe Si-H, dans laquelle le terme « interpolymère oléfine/silane » fait référence à un interpolymère aléatoire qui comprend, sous forme polymérisée, au moins 50 % en poids, ou un pourcentage en poids majoritaire d'une oléfine (sur la base du poids de l'interpolymère), et un monomère silane, et est formé par la copolymérisation d'au moins l'oléfine et le monomère silane, et
b) un polymère à base de propylène, ou une composition à base de propylène qui comprend un polymère à base de propylène, dans laquelle l'interpolymère oléfine/silane est formé en présence d'un complexe métallique bis-biphényloxy, et dans laquelle la composition ne comprend pas de peroxyde.

11. Composition selon la revendication 10, dans laquelle l'interpolymère oléfine/silane du *composant a* est un interpolymère éthylène/alpha-oléfine/silane.

12. Composition selon la revendication 10 ou la revendication 11, dans laquelle le *composant a* a une masse volumique allant de 0,855 g/cm³ à 0,940 g/cm³.

13. Composition selon l'une quelconque des revendications 10 à 12, dans laquelle, pour le *composant b,* chacun du polymère à base de propylène, ou du polymère à base de propylène de la composition à base de propylène, est choisi parmi ce qui suit : a) un homopolymère de polypropylène, b) un interpolymère propylène/éthylène, ou c) un interpolymère propylène/alpha-oléfine.

14. Composition selon l'une quelconque des revendications 10 à 13, dans laquelle le silane de l'interpolymère oléfine/silane est dérivé d'un monomère silane choisi parmi la Formule 1 : A-(SiBC-O)x-Si-EFH (Formule 1), où A est un groupe alcényle, B est un groupe hydrocarbyle ou hydrogène, C est un groupe hydrocarbyle ou hydrogène, et où B et C peuvent être identiques ou différents ;
H est hydrogène, et x > 0 ; E est un groupe hydrocarbyle ou hydrogène, F est un groupe hydrocarbyle ou hydrogène, et où E et F peuvent être identiques ou différents.

15. Composition selon la revendication 14, dans laquelle la Formule 1 est choisie parmi les composés s1) à s16) ci-après : 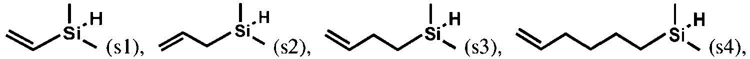 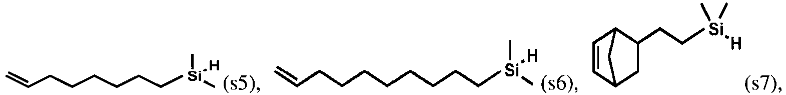 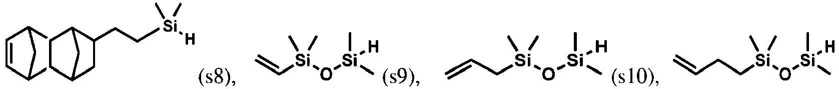 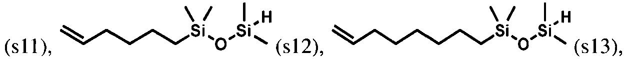 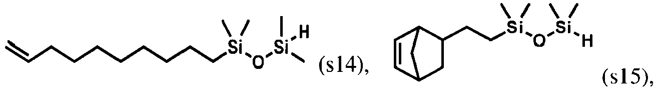 ou
